# EUROPEAN PATENT SPECIFICATION

(11) **EP 4 711 068 B1**
(45) Date of publication and mention of the grant of the patent: **11.11.2026**
(21) Application number: 24200638.5
(22) Date of filing: 16.09.2024
(51) Int. Cl.: B23K 26/0622, B23K 26/211, B23K 26/324, G06N 10/00, B23K 26/57, G06N 10/40, B23K 103/00

(54) **METHOD OF PRODUCING AN ATOM TRAP APPARATUS AND ATOM TRAP APPARATUS**
VERFAHREN ZUR HERSTELLUNG EINER ATOMFALLENVORRICHTUNG UND ATOMFALLENVORRICHTUNG
PROCÉDÉ DE PRODUCTION D'UN APPAREIL DE PIÈGE À ATOMES ET APPAREIL DE PIÈGE À ATOMES

(43) Date of publication of application: 18.03.2026
(73) Proprietor: QUDORA Technologies GmbH, 38126 Braunschweig (DE)
(72) Inventor: Bautista-Salvador, Amado, 38100 Braunschweig (DE); Zarantonello, Giorgio, 38100 Braunschweig (DE)
(74) Representative: Betten & Resch

(56) References cited:
- EP-A1- 3 979 298
- US-A1- 2021 335 591
- US-A1- 20240 149 375
- US-A1- 20240 242 951

## Description

### TECHNICAL FIELD

The present disclosure relates to a method of producing an atom trap apparatus and to an atom trap apparatus that e.g. may be used for quantum computing.

### BACKGROUND

Atom traps are a promising candidate for the realization of quantum computers, and are frequently used for atomic clocks/frequency standards, and as quantum sensors. Atom traps allow to trap, store and manipulate single and multiple charged/neutral particles and to make use of their quantum nature. In a quantum computer, single trapped atoms may be used as individual qubits.

An atom trap apparatus typically comprises multiple different components that are used e.g. for storing and controlling trapped atoms, for performing quantum gate operations on trapped atoms, and for readout internal states of trapped atoms. Several approaches are known how the different components can be integrated into an atom trap apparatus.

For instance, the components may be fabricated on dedicated layers with compatible materials and grown upon each other on a single wafer (monolithic approach). Stuart et al., "Chip-Integrated Voltage Sources for Control of Trapped Ions", Physical Review Applied 11, 2019, doi: 10.1103/PhysRevApplied.11.024010, discloses the cryogenic operation of an ion trap that incorporates monolithically integrated high-voltage complementary metal-oxide semiconductor (CMOS) electronics (±8V full swing) to generate surface-electrode control potentials without the need for external analog voltage sources.

Another approach relates to wafer stacking. Some components are grown on common wafers, some other components are grown on individual wafers, and then the wafers are stacked on top of each other.

One widely used method of bonding the stacked wafers is anodic wafer bonding, as disclosed in Auchter et al., "Industrially microfabricated ion trap with 1 eV trap depth", Quantum Sci. Technol. 7 035015, doi: 10.1088/2058-9565/ac7072.

Another typical way of bonding stacked wafers is by gluing. Pyka et al., "A high-precision rf trap with minimized micromotion for an In+ multiple-ion clock", arXiv:1206.5111, 2012, doi: 10.48550/arXiv.1206.5111, discloses a linear ion trap designed for the operation of a many-ion optical clock using 115-In⁺ as clock ions. The ion trap comprises a glued stack of boards.

The monolithic approach may be challenging due the increasing number of steps needed to complete the device and narrow material selection to keep the accumulated stress as low as possible. Since the complete process flow tends to be intrinsically hierarchical, the production yield may be low and increasing it may be financially costly and time consuming. Further, it may be challenging to achieve efficient thermal management of the components at a large scale.

Stacking wafers or substrates on top of each other may bear the risk of decreasing the overall assembly yield. The spectrum of material choice for anodic wafer bonding is limited. Wafer bonding, specifically anodic wafer bonding, requires high temperatures around 400-450 °C, and high applied voltages around 400-1200 V. In addition, high level of cleanliness and borosilicate glass type is required. These requirements narrow down the selection to materials with similar coefficients of thermal expansion and limits its applicability to substrates having no electrically sensitive components. If considerable thermal mismatch happens during the anodic bonding process, the bonded substrates may bow or wrap.

Another disadvantage of this approach is that the singulation method so far demonstrated to work is wafer saw dicing. Due to the strong water jet needed during the dicing process, a protective coating is typically applied with a photoresist. The photoresist is typically removed by means of a solvent. This process may add potential contamination on the atom trap apparatus, which may result in dielectric deposits on surfaces of the atom trap apparatus having a direct line of sight to the atom. These dielectric deposits may cause excessive micromotion or anomalous heating rates, thereby potentially reducing coherence times and gate fidelities.

US 2021/335591 A1 discloses an ion-trap system comprising an ion trap disposed on a chip carrier and an enclosure that encloses the ion trap in a first chamber. The enclosure includes a plurality of piece parts that includes the chip carrier and a housing. The piece parts of the plurality thereof are joined with a plurality of seals that consists of UHV seals. Each of the UHV seals is a laser-weld joint.

US 2024/0242951 A1 discloses a micro-fabricated device for controlling trapped ions. The micro-fabricated device comprises a first substrate having a main surface. A structured first metal layer is disposed over the main surface of the first substrate. The structured first metal layer includes electrodes of at least one ion trapping zone configured to trap an ion in a space above the structured first metal layer. A dielectric element is fixedly attached to the first substrate. The dielectric element may include or be of glass, in particular quartz glass, borosilicate glass, alkali-free glass, or fused silica. The micro-fabricated device further includes a second substrate which is spaced apart from the first substrate. The at least one ion trapping zone is located in a space between the first substrate and the second substrate. The dielectric element may form a spacer structure between the first substrate and the second substrate.

EP 3979298 A1 discloses a device for controlling trapped ions that includes a first semiconductor substrate. A second semiconductor substrate is disposed over the first semiconductor substrate. At least one ion trap is configured to trap ions in a space between the first semiconductor substrate and the second semiconductor substrate. A spacer is disposed between the first semiconductor substrate and the second semiconductor substrate, the spacer comprising an electrical interconnect which electrically connects a first metal layer structure of the first semiconductor substrate to a second metal layer structure of the second semiconductor substrate.

### SUMMARY

It is an object of the present disclosure to overcome the aforementioned disadvantages and in particular to provide a reliable, scalable and modular method of producing an atom trap apparatus of a high quality, and to provide a corresponding atom trap apparatus.

The above-mentioned objects are addressed by the present invention. The present invention is defined by the independent claims. Dependent claims specify embodiments thereof.

According to a first aspect of the present disclosure, a method of producing an atom trap apparatus is provided. The atom trap apparatus comprises a first substrate and a second substrate. The method comprises providing a first substrate comprising a main surface and providing a second substrate comprising a main surface. The method comprises arranging the first substrate and the second substrate with respect to each other. The method comprises bonding the first substrate and the second substrate. Bonding the first substrate and the second substrate comprises forming at least one joint by means of laser beam welding. The atom trap apparatus comprises at least one atom trap located above the main surface of the first substrate and/or located above the main surface of the second substrate.

Implementations of aspects of the present disclosure allow to bond the first substrate and the second substrate reliable and with high precision. It is possible to replace damaged substrates/components, as joints formed by laser beam welding can be detached by employing a laser. The heat impact of the bonding may be kept minimal and locally constrained, thereby minimizing potential heat-related damages and heat-related stress to the substrates. It becomes possible to use different materials for the first substrate and the second substrate.

Implementations of aspects of the present disclosure may hold high flexibility for improving an atom trap apparatus and increasing its performance by upgrading/replacing individual substrates thereof.

The disclosed method and the disclosed atom trap apparatus are highly scalable and highly modular. The disclosed methods may allow to provide a high-quality atom trap apparatus that is scalable and modular.

The atom trap apparatus may comprise a single atom trap or a plurality of atom traps. Features disclosed with respect to a single atom trap generally also apply to each of a plurality of atom traps, unless specified otherwise and unless otherwise contradictory.

The atom trap apparatus may be used for quantum computing. E.g., the present atom trap apparatus may be/may be comprised in a quantum computer.

The atom trap apparatus may be used for an (atomic) clock/for a frequency standard. E.g., the present atom trap apparatus may be/may be comprised in an (atomic) clock/a frequency standard.

The atom trap apparatus may be used for quantum sensing. E.g., the present atom trap apparatus may be/may be comprised in a quantum sensing apparatus/a quantum sensor.

The atom trap may be a trap configured to trap neutral atoms/particles. The atom trap may be an ion trap, i.e. a trap configured to trap charged atoms/charged particles. The following description is generally applicable to all kinds of atom traps, including traps for neutral atoms and traps for charged particles/ion traps, unless specified otherwise and unless otherwise contradictory.

The atom trap may be configured to trap one or more atoms/ions therein. Each atom/ion may be an individual qubit of a quantum computer. Alternatively, an individual qubit of a quantum computer may be formed by a plurality of atoms/ions trapped in the atom/ion trap, or in a plurality of atom/ion traps.

Herein, the term "atom trap" is used, which may refer to ion traps. Herein, the term "atom" is used, which e.g. may refer to neutral atoms and/or to charged atoms, i.e. ions.

The atom trap/the atom trap apparatus may be configured to trap and/or to manipulate an atom in the atom trap. An ion trapped in the atom/ion trap may be one of the following species: Ba⁺, Be⁺, Ca⁺, Mg⁺, Sr⁺, Yb⁺. The atom trap may also be configured to trap atoms of a plurality of species, e.g. double species. E.g., the ion trap apparatus may be configured to perform (sympathetic) cooling via atoms (neutral atoms/ions) of one species, and computation via atoms (neutral atoms/ions) of another species.

The atom trap/the atom trap apparatus may be configured to trap (cold) neutral atoms and ions, e.g. the atom trap may be a hybrid trap. This may allow for a higher versality of the atom trap apparatus.

The atom trap/the atom trap apparatus may be configured to trap atomic particles and/or molecular particles e.g. single particles and/or plurality of particles, e.g. single, doubly or highly ionized particles.

The atom trap may be any type of atom trap. E.g., the atom trap may be a Paul trap, which sometimes is also referred to as "RF trap" and/or as "Quadrupole ion trap". The atom trap may also be a (planar) Penning trap and/or a combination of a Paul trap and a Penning trap.

The atom trap may also be a magneto-optical trap or an atom chip trap.

The atom trap apparatus may also comprise a plurality of atom traps, e.g. atom traps that have different functions such as detection, cooling and/or performing quantum gates. The atom trap apparatus may comprise one or more atom traps for each respective function, e.g. one or more detection atom traps, one or more cooling atom traps, and/or one or more manipulation/computation/gate atom traps.

The term "substrate", as used in "first/second substrate", should not be understood as exclusively relating to a wafer. The term "substrate" may also relate to a die/parts of a wafer.

The atom trap may be a Paul trap. A Paul trap comprises a set of RF electrodes, configured to provide an RF trapping potential, and a set of DC electrodes, configured to provide a DC trapping potential. The trapping potential of the Paul trap comprises the RF trapping potential and the DC trapping potential.

The RF trapping potential e.g. may have a frequency of 1 MHz or more. The RF trapping potential e.g. may have a frequency of 200 MHz or less. An RF signal of one electrode of the RF electrode set e.g. may have a frequency of 1 MHz or more. An RF signal of one electrode of the RF electrode set e.g. may have a frequency of 200 MHz or less.

The atom trap apparatus may comprise coils configured to provide static magnetic fields, e.g. for trapping and/or manipulation on trapped atoms/ions, e.g. for performing gate operations.

The atom trap may comprise a microwave electrode that is configured to provide a microwave field configured to perform and/or to be used in a quantum gate operation on an atom trapped in the atom trap. Optionally, the microwave electrode may be configured to generate a microwave magnetic near-field in the atom trap, the microwave magnetic near-field comprising a gradient.

The microwave field may have a frequency of 500 MHz or more. The microwave field may have a frequency of 50 GHz or less. A microwave signal of the microwave electrode may have a frequency of 500 MHz or more. A microwave signal of the microwave electrode may have a frequency of 50 GHz or less.

The microwave field may have a frequency of 1 MHz or more. The microwave field may have a frequency of 50 GHz or less. A microwave signal of the microwave electrode may have a frequency of 1 MHz or more. A microwave signal of the microwave electrode may have a frequency of 50 GHz or less.

The frequency of the microwave field may depend on the species of the trapped atom/ion.

The present atom trap apparatus is not limited to atom traps employing microwave electrodes for performing quantum gates. Instead, other approaches may be used, e.g. ones that employ lasers but no microwave signals.

An atom trapped in the atom trap may be assumed to be located at the minimum of the total potential/pseudopotential of the atom trap. The (usual) position of an atom trapped in the atom trap/the minimum of the total potential/pseudopotential may also be referred to as the center of the trap. The terms "trapped atom" and "atom trapped in the atom trap" may be used interchangeably/in the same context/with the same meaning, unless specified otherwise and unless otherwise contradictory.

The term "atom trap" and "trapping potential of an atom trap" may be used interchangeably/in the same context/with the same meaning, unless specified otherwise and unless otherwise contradictory. In particular, the term "atom trap" may be used as an abbreviation of the term "trapping potential of the atom trap". E.g., the expression "atom trap located above the main surface of the first/second substrate" may refer to "trapping potential of the atom trap located above the main surface of the first/second substrate".

The at least one atom trap located above the main surface of the first substrate and/or located above the main surface of the second substrate may have a direct line of sight to the main surface of the first substrate and/or to the main surface of the second substrate. The term "located above a main surface" may refer to "having a direct line of sight to the main surface".

The atom trap may be located above the main surface of a respective substrate that supports electrodes of the atom trap, e.g. on its main surface.

The first substrate and/or the second substrate may support electrodes (e.g. DC, RF and/or MW electrodes) of the at least one atom trap on its respective main surface.

The first substrate and/or the second substrate may have a thickness of 50 mm or less, or 30 mm or less, or 20 mm or less, or 10 mm or less, or 5 mm or less. The first substrate and/or the second substrate may have a thickness of 50 µm or more, or 100 µm or more, or 500 µm or more, or 1 mm or more.

Features disclosed with respect to the first substrate may also apply to the second substrate and vice versa, unless specified otherwise and unless otherwise contradictory.

The first substrate and the second substrate may comprise the same materials/may be formed of the same materials. This may facilitate the bonding.

The first substrate and the second substrate may comprise dissimilar materials/may be formed of different/dissimilar materials. This may allow to select different materials for the two substrates, e.g. based on respective different functions.

The first substrate may be transparent, e.g. at a wavelength of the laser used for forming the at least one joint by means of laser welding. The first substrate may comprise a dielectric material, optionally at least one of the following materials: SiO₂, Al₂O₃, AIN, BeO, diamond, SiN, fused silica, Quartz, sapphire, ITO, ZrO. The second substrate may be transparent. The second substrate may comprise the same material as the first substrate, e.g. a dielectric material.

The second substrate may comprise a semiconductor material, optionally at least one of the following materials: Si, SiC, GaN, Graphene. The second substrate may be non-transparent. The second substrate and/or components supported thereby may be provided by standard semiconductor fabrication processes such as CMOS, which are not commonly used in the context of atom traps but which are well established in chip/semiconductor manufacturing and which reproducibly provide a high quality.

Components/substrates that are manufactured by standard semiconductor fabrication processes such as CMOS may be manufactured and tested. Such components may then be mounted e.g. on the first substrate and/or on the second substrate. This may allow to work with functional components/substrates only, which may assure a further increase in the yield of the assembly of different substrates mounted together.

Surfaces of the first substrate and/or the second substrate, e.g., the respective main surfaces, that have a direct line of sight to an atom trapped in the atom trap/a position of an atom when trapped in the atom trap, may be respectively coated with a conductive layer, e.g. a metal layer, to avoid built-up of parasitic charges and to avoid uncontrolled e-fields from built-up charges on substrate surfaces.

The RF electrodes and/or the DC electrodes and/or the microwave electrode may be multilayer electrodes, e.g. provided/located/supported on the first and/or second substrate (e.g. on the respective substrate they are supported by, e.g. on the respective main surface). One or more of the multilayer electrodes may comprise at least one dielectric layer in between electrode layers of the respective multilayer electrode.

The RF electrodes and/or the DC electrodes and/or the microwave electrodes may also be single-layer electrodes. It is also possible to use multilayer geometries for some of the electrodes and single-layer geometries for other of the electrodes.

The dielectric layer(s) between electrode layers of respective multilayer electrode may comprise at least one of the following materials: Polyimide, SiO₂, SiN, TEOS (Tetraethyl orthosilicate).

The dielectric layer(s) may comprise a different material as compared to a basic/main material of the first substrate and/or of the second substrate.

The first substrate and/or the second substrate may support components of the atom trap apparatus, e.g. RF/DC/MW electrodes, (single) photon detectors, waveguides, integrated electronics (such as Digital-Analog-Converters, DACs) etc.

A component "supported" by a substrate may refer to a component being located on a surface of the substrate. It may also refer to the component being (partly or fully) embedded/integrated into the substrate.

The first substrate may support position-sensitive components of the atom trap apparatus, e.g. all. The first substrate may also support non-position sensitive components. The second substrate may support non-position sensitive components. A position-sensitive component may be a component whose alignment, e.g. with respect to the position of an atom trapped in the atom trap, is critical, and where e.g. a misalignment with respect to the atom trap/other components of the atom trap cannot be easily corrected while such a misalignment reduces the quality of the atom trap apparatus (e.g., the fidelity of quantum gate operations).

E.g., when coupling (laser) light/an optical signal onto a trapped atom, it is important to have the atom well aligned to the focus of the optical signal coupled onto the atom. If there is a misalignment between the RF-null of the RF trapping potential of the atom trap and the focus of the optical signal, it may be necessary to shift the atom position by applying DC correction voltages to one or more of the DC electrodes. Shifting the atom away from the RF-null may induce micromotion, which is detrimental to the fidelity/the quality of the atom trap.

A misalignment of the DC trapping potential with respect to the RF trapping potential/the (RF) null position can be easily corrected by applying correction voltages to electrodes of the DC electrode set. E.g., it is possible to minimize such a misalignment to below 100 nm, e.g. to a few 10s of nm. Hence, the position of the DC electrodes of the DC electrode set may be considered as non-position sensitive/critical, and the DC electrodes of the DC electrode set may be considered as non-position sensitive/critical components.

The first substrate may support, e.g. some or all, RF components of the atom trap apparatus. The second substrate may support, e.g. some or all, DC components of the atom trap apparatus. The second substrate and/or components supported thereby may be provided by standard semiconductor fabrication processes such as CMOS.

The first/second substrate may support one or more optical waveguides, each of which may be configured to provide optical access to an atom trapped in the atom trap.

The first/second substrate may support at least one photon detector. The at least one photon detector may be arranged to have a direct line of sight to a position of an atom when trapped in the atom trap, e.g. respectively. The at least one photon detector may be configured to receive an optical signal of the atom when trapped in the atom trap, e.g. respectively. The at least one photon detector may be supported by the first substrate and/or by the second substrate, e.g. respectively.

Having a (single) photon detector with a direct line of sight to a position of an atom when trapped in the atom trap allows for integrated detection of optical signals of the atom, which may allow for high scalability (e.g., in order to scale the atom trap apparatus to a larger number of trapped atoms/qubits) and which may allow for improved readout efficiency.

The photon detector may comprise/may have a transparent conductive coating/film to avoid built-up of parasitic charges, e.g. to avoid uncontrolled e-fields from built-up charges on dielectric surfaces. Due to the transparency of the conductive coating/film, photons can be collected by the photon detector.

The second substrate may comprise/may support integrated electronics. Integrated electronics may allow for high scalability. For production of the integrated electronics, standard semiconductor fabrication processes such as CMOS may be used, which have a high reliability and which are well established.

Also the first substrate may comprise/may support integrated electronics. In the following, the integrated electronics are discussed with respect to the second substrate, but corresponding features may also apply to the first substrate unless specified otherwise and unless otherwise contradictory.

The integrated electronics may be configured to provide a DC voltage to one of the DC electrodes supported by the second substrate. The integrated electronics may optionally comprise one or more digital-to-analog converters, DACs.

The integrated electronics may be configured to control a respective DC voltage supplied to/provided to the one or more DC electrodes supported by the second substrate. The integrated electronics may comprise integrated circuit logic, e.g. manufactured by standard semiconductor fabrication processes such as CMOS. This may have the advantage that the integrated electronics can be integrated very well.

The integrated electronics may comprise at least one: interconnects, feedlines, electrical lines and/or vias. The integrated electronics e.g. may be (partly or fully) embedded/integrated into the second substrate.

The integrated electronics may be sensitive to heat. As the laser beam welding may generate heat for very short time intervals and very localized, it is possible to not damage the integrated electronics by the laser beam welding. In other words: The present method may allow to use substrates with integrated electronics, e.g. produced by CMOS-processes, and to still bond such substrates to other substrates.

E.g., in some implementations the integrated electronics may be monolithically integrated into the second substrate. E.g., in some implementations a first layer of the integrated electronics (e.g., a circuit thereof) may be embedded in the second substrate and the additional layers of the integrated electronics (e.g., the circuit thereof) may be built on top (depending on design complexity)/may be grown on top of each other. Then, DC electrodes may be defined in a separate process, e.g. a post-CMOS/BEOL process, on top of second substrate.

E.g., in some implementations, the second substrate may comprise/may be composed of a stack of two substrate: a substrate supporting dedicated DC electrodes attached/bonded thereto/provided thereon, and a dedicated substrate with integrated electronics, e.g. manufactured by a standard semiconductor fabrication processes such as CMOS. The integrated electronics may comprise integrated circuits.

The first substrate and/or the second substrate may be structured substrates. E.g., conductive areas on the main surface of the first substrate/the second substrate may be isolated/separated from other areas of the respective main surface. E. g., conductive coatings/films on the main surface of the first/second substrate may be isolated/separated from other conductive coatings/films of the respective main surface.

Conductive coatings/films on surfaces of the first/second substrate may be electrodes of the at least one atom trap. Conductive coatings/films on surfaces of the first/second substrate may be configured to route electrical signals, e.g. may be electrical lines. The electrical lines may be DC/RF/MW lines. The electrical lines may provide an electrical ground.

E.g. the first substrate and/or the second substrate may be structured by means of selective laser etching (SLE) or by laser induced deep etching (LIDE).

E.g., the first substrate and/or the second substrate may have a conductive coating/film, e.g. a metal coating, e.g. a gold coating. The first substrate and/or the second substrate may be coated by means of liftoff, galvanic coating (e.g., employing lithography), vapor deposition (e.g., using a deposition mask such as a glass mask), e.g. physical vapor deposition, sputtering.

It may also be possible that only the first substrate is structured, while the second is not, and vice versa.

Structuring the first substrate/second substrate may also refer to providing a selective coating and/or to structuring a coating.

Structuring the first/second substrate may refer to forming recesses (e.g., via SLE or LIDE), e.g. at the respective main surface and/or at an opposite surface. The structured first/second substrate may comprise recesses, e.g. at its respective main surface. The recesses may be (partially) coated. The recesses may isolate/separate (conductive) areas of the first substrate/second substrate. The recesses may comprise conductive films configured to route electrical signals/to provide an electrical connection. The recesses may be configured to route electrical signals/to provide an electrical connection. The conductive films may provide DC/RF/MW lines. The conductive films may provide an electrical ground.

The first/second substrate may comprise one or more holes, e.g. extending from a main surface of the substrate to an opposite side of the substrate. The holes may be metallized, e.g. may comprise a metal coating/a conductive coating at their inner side surface. The holes may be configured to route electrical signals (e.g., DC, RF, MW, ground) from one side of the substrate to the other side of the substrate. The holes may be understood as vias.

Conductive coatings of the first/second substrate may have openings that allow a laser beam, e.g. used for laser beam welding, to pass through.

The method may comprise structuring the first and/or second substrate, e.g. prior to arranging the first substrate and the second substrate with respect to each other.

The at least one joint may connect the first substrate and the second substrate. The at least one joint may connect the first substrate and the second substrate in a direct manner, i.e. by directly contacting the first substrate and the second substrate. The at least one joint may connect the first substrate and the second substrate in an indirect manner, i.e. by indirectly contacting the first substrate and/or the second substrate, e.g. by directly contacting one or more further components arranged between the joint and the first/second substrate.

The at least one joint e.g. may have a diameter of 100 µm or more and e.g. may have a diameter of 2 mm or less, optionally 1 mm or less, optionally 500 µm or less. A smaller size of the at least one joint may allow to reduce stress in the at least one joint. A larger size of the at least one joint may improve the strength of the bonding, e.g. such that fewer joints are required to reach a specific bonding strength. It is possible to control the dimensions of the joint based on the focus of the laser beam used for laser beam welding.

The at least one joint may be a welding seam, e.g. comprising individually welding spots that have a diameter of 100 µm or more and 2 mm or less, or 1 mm or less, or 500 µm or less, and that e.g. overlap with each other. The welding seam e.g. may have a diameter of 100 µm or more and e.g. may have a diameter of 2 mm or less, or 1 mm or less, or 500 µm or less, e.g. in direction perpendicular to the seam direction. The welding seam e.g. may have a length in the seam direction of e.g. 100 µm or more, or 200 µm or more, or 500 µm or more, or 1 mm or more, or 2 mm or more. The welding seam e.g. may have a length of 10 mm or less, or 5 mm or less, or 2 mm or less.

The at least one joint may be non-transparent or may have a low transparency.

The first substrate and the second substrate may be arranged with respect to teach other e.g. with a tolerance of less than 1 µm or less, e.g. using a flip-chip procedure.

The first substrate and the second substrate may be cleaned, e.g. before bonding the first substrate and the second substrate.

Bonding the first substrate and the second substrate may comprise passing the laser beam used for laser beam welding through the first substrate and/or through the second substrate. Each surface of the first/second substrate through which the laser beam passes may have a high surface quality.

The first substrate and the second substrate may be arranged with respect to each other at a distance of 10 µm or less, or 6 µm or less, or 3 µm or less, or 1 µm or less, or 0.5 µm or less (e.g., prior to bonding the first substrate and the second substrate). During bonding, the first substrate and the second substrate e.g. may have a distance of 3 µm or less, or 1 µm or less, or 0.5 µm or less.

The laser beam welding may rely on self-focusing effects, e.g. in the transparent first/second substrate and/or in a transparent spacer element.

The atom trap may be a surface trap, e.g. a 2D Paul trap. Some or all electrodes (e.g., DC electrodes, RF electrodes and/or the MW electrode) of the atom trap may be supported by the first substrate and/or by the second substrate, e.g. on its respective main surface.

The first substrate may support electrodes of an atom trap of the at least one atom trap, and the second substrate may support other electrodes of the atom trap of the at least one atom trap. The atom trap may be located above the main surface of the first substrate and above the main surface of the second substrate. The main surface of the first substrate and the main surface of the second substrate may be located in a single plane.

The atom trap apparatus may comprise a first atom trap and a second atom trap. The first substrate may support electrodes, e.g. some or all DC, RF and/or MW electrodes, of the first atom trap. The first atom trap may be located above the main surface of the first substrate. The second substrate may support electrodes, e.g. some or all DC, RF and/or MW electrodes, of the second atom trap. The second atom trap may be located above the main surface of the second substrate. Here, the terms "first atom trap" and "second atom trap" are used on order to indicate a relation between the respective atom trap and the corresponding substrate. They do not necessarily indicate a specific number of atom traps comprised in the "at least one atom trap". E.g., there may be a "second atom trap" without a "first atom trap" and vice versa. The numeration "first/second" may also be omitted.

The atom trap apparatus may comprise a plurality of atom traps, e.g. a storage trap, a manipulation trap and/or a detection trap. A storage trap may be configured to store one or more atoms, e.g. when they are not required for computations. A manipulation trap may be configured to perform quantum gates on a single atom and/or on multiple atoms trapped in the manipulation trap. A detection trap may be configured to readout an internal state of an atom trapped in the detection trap. The atom trap apparatus may be configured to shuttle atoms between individual atom traps of the plurality of atom traps.

The atom traps of the plurality of atom traps may be 2D traps or 3D traps.

Having a plurality of atom traps that are different from each other may allow to perform dedicated functions in dedicated traps. This may increase the variability of the atom trap apparatus. Further, dedicated atom traps may perform their respective functions with a higher fidelity and/or less decoherence. Further, having a plurality of atom traps may facilitate scalability of the atom trap apparatus.

Embodiments of the present disclosure allow to combine different substrates of an atom trap apparatus, thereby facilitating scalability of the atom trap apparatus.

The second substrate (or the first substrate) may comprise a Faraday cage. E.g., the other substrate, i.e. the first substrate (or the second substrate) may support electrodes of the atom trap (e.g., "first/second atom trap") located above the main surface. The second substrate (or the first substrate) may have a metal coating/a conductive coating that provides the Faraday cage, e.g. on surfaces that have a direct line of sight to the atom trap. The Faraday cage may allow to shield the atom trap from stray electric field noise and to reduce decoherence.

The at least one atom trap may be a 3D trap. The at least one atom trap may be located above the main surface of the first substrate and above the main surface of the second substrate, and the main surface of the first substrate and the main surface of the second substrate may face each other. The at least one atom trap may be located between the first substrate and the second substrate. The first substrate may support one or more, optionally all, RF electrodes of the RF electrode set and the second substrate may support one or more, optionally all, DC electrodes of the DC electrode set (or vice versa, the first substrate may support one or more, optionally all, DC electrodes of the DC electrode set and the second substrate may support one or more, optionally all, RF electrodes of the RF electrode set).

Having two substrates, arranged above each other, that (respectively) provide the RF trapping potential and the DC trapping potential, may allow for high trap depths as compared to conventional surface traps, in which the RF electrode set and the DC electrode set are supported by the same substrate.

If the first substrate and the second substrate face each other, the term "above the main surface of the first/second substrate" may be understood such that the respective "above"-directions are opposite to each other. E.g., an atom trap located above the main surface of the first substrate and above the main surface of the second substrate may be located between the respective main surfaces, e.g. if the respective main surfaces face each other.

The main surface of the first substrate and the main surface of the second substrate may face each other. Electrodes of the atom trap may be formed on/may be supported by the first substrate and by the second substrate.

The at least one joint may be formed by means of laser beam welding using a pulsed laser. The pulsed laser beam may have a pulse width between 1 femtosecond and 1 microsecond, optionally 1 femtosecond and 100 nanoseconds, optionally 1 femtosecond and 10 nanoseconds, optionally 1 femtosecond and 1 nanosecond, optionally 1 femtosecond and 100 picoseconds, optionally 1 femtosecond and 10 picoseconds, optionally between 10 femtoseconds and 5 picoseconds, optionally between 50 femtoseconds and 1 picosecond.

Such pulse configurations may allow to obtain reliable bonds with localized heat impact and high quality in a reproducible manner.

The wavelength of the laser beam used for laser beam welding may be in the visible range, e.g. around 515 nm, e.g. 480 nm or more and 550 nm or less. The wavelength of the laser beam may be in the infrared range, e.g. around 1030 nm, e.g. 960 nm or more and 1100 nm or less.

The maximum pulse energy may be e.g. 1 µJ or more and e.g. 100 µJ or less, or 10 µJ or less, optionally 2 µJ or more and 5 µJ or less, e.g. around 4 µJ or around 2 µJ.

The repetition rate of the pulsed layer may be e.g. 100 kHz or more. The repetition rate may be 1 kHz or more, or 10 kHz or more. The repetition rate may be 10 MHz or less. The repetition rate may be 1 MHz or less.

The maximum power of the laser e.g. may be 4 W or less.

Parameters of the pulsed laser e.g. may be chosen such that the pulsed laser does not ablate material of the first substrate and/or the second substrate. It is also possible to use a pulsed laser that ablates material of the first substrate and/or the second substrate.

The at least one joint may comprise a joint comprising dissimilar materials. The first substrate and the second substrate may comprise dissimilar materials. The at least one joint may comprise dissimilar materials.

Having the joint comprising dissimilar materials and/or having dissimilar materials comprised in the first/second substrate allows for a high variability. E.g., the material of the first/second substrate may be matched to specific functions of the first/second substrate. Different manufacturing technologies may be used for the first/second substrate. E.g., the second substrate and/or components supported thereby may be provided by standard semiconductor fabrication processes such as CMOS.

Having substrates that comprise dissimilar materials allows to allocate the components of the atom trap apparatus to the respective substrate according to the most suitable fabrication technique, thereby allowing to increase the assembly yield by reducing the fabrication complexity of the respective substrates.

One or more, e.g. all, joints of the at least one joint may comprise materials of the first substrate and/or of the second substrate. In the following, one joint is discussed, but the corresponding disclosure may apply to one or more, e.g. all, joints of the at least one joint, unless specified otherwise and unless otherwise contradictory.

E.g., the joint may be a glass/semiconductor joint, e.g. if the first substrate comprises glass and the second substrate comprises a semiconductor material. E.g., the joint may be a glass/glass joint, e.g. if the first substrate comprises glass and the second substrate comprises glass.

E.g., the joint may be a glass/metal joint, e.g. if the first substrate comprises glass and if a metal/bonding material is present between the first substrate and the second substrate. The metal material may be a metal layer, e.g. provided on the first/second substrate or comprised therein. Bonding the first substrate and the second substrate may comprise heating the metal/bonding material by the laser beam due to absorption of the laser beam. The metal/bonding material may in turn diffuse and thereby connect the first substrate and the second substrate. Bonding the first substrate and the second substrate may comprise melting the metal/bonding material, but it is not necessary that the metal/bonding material is melted.

E.g. the joint may be a metal/metal joint, e.g. if two metal materials are present between the first substrate and the second substrate. Bonding the first substrate and the second substrate may comprise heating at least one of the two metal/bonding materials due to absorption (e.g., the thinner metal layer, e.g. the first bonding material on the first substrate), which in turn may heat the other metal material (e.g., the thicker metal layer, e.g. the second bonding material on the second substrate), and in turn, both metal/bonding materials may diffuse and thereby connect the first substrate and the second substrate. Bonding the first substrate and the second substrate may comprise melting both metal/bonding materials but it is not necessary that both metal/bonding materials or one of the both metal/bonding materials is melted.

The first substrate and the second substrate may be arranged such that a bonding material is present between the first substrate and the second substrate. Forming the at least one joint may comprise heating the bonding material.

E.g., the first substrate and/or the second substrate may be coated with a bonding material/a layer comprising the bonding material, e.g. before being arranged with respect to each other. E.g., the first substrate and/or the second substrate may be provided with a bonding material. The bonding material may be a bonding layer/a layer comprising the bonding material. E.g., the first substrate and/or the second substrate may have a bonding material, e.g. on areas of its main surface, e.g. before being arranged with respect to each other. E.g., the respective bonding materials/layers may be denoted as first/second bonding material/layer. They may differ in material and/or in thickness. E.g., one of the bonding layers may be thick and the other one may be thin. E.g., one of the bonding layers/materials may have a thickness of 1.0 µm or less, and the other bonding layer/material may have a thickness of 1.0 µm or more and 100 µm or less. The first bonding material and the second bonding material may have a different surface area. In a top view, the first bonding material and the second bonding material may overlap, e.g. fully or partially. In a top view, a layer of the second bonding material may overlap with several (e.g., smaller) layers of the first bonding material, and vice versa.

The (first/second) bonding materials may have a thickness of 100 µm or less, or 10 µm or less, or 1.0 µm or less, or 0.5 µm or less.

The bonding material e.g. may comprise a metal, such as e.g. gold, copper, silver, and/or an alloy. The bonding material e.g. may comprise a conductive material. The bonding material may have a high absorption at a wavelength of the laser beam used for laser beam welding. The bonding material may electrically connect the first substrate and/or the second substrate.

Bonding the first substrate and the second substrate may comprise heating the bonding material due to absorption. In turn, the bonding material may diffuse and thereby connect the first substrate and the second substrate. Bonding the first substrate and the second substrate may comprise diffusing and/or melting the bonding material due to absorption, but it is not necessary that the bonding material is melted.

Bonding the first substrate and the second substrate may comprise heating the first/second bonding material due to absorption. The first/second bonding material may in turn heat the second/first bonding material. Bonding the first substrate and the second substrate may comprise diffusing and/or melting the first/second bonding material, but it is not necessary that both bonding materials or one of the both bonding materials is melted. It is also possible to only heat/melt/diffuse one of the two bonding materials, which then e.g. may connect to the other bonding material, e.g. by diffusing. E.g., the thinner bonding material may be heated due to absorption of the laser beam used for laser beam welding. E.g., the thicker bonding material may be heated by the thinner bonding material. Bonding the first substrate and the second substrate may comprise nanograting the first/second bonding material.

The at least one joint, or joints of the at least one joint, may comprise an interlayer comprising the bonding material or the first bonding material and the second bonding material. The at least one joint, or joints of the at least one joint, may comprise the bonding material (e.g., as a layer or in a compound comprising materials of the first and/or the second substrate).

The first substrate and the second substrate may be arranged with respect each other such that a distance between the first substrate and a bonding material of the second substrate is 10 µm or less, or 6 µm or less, or 3 µm or less, or 1 µm or less, or 0.5 µm or less (e.g., prior to bonding the first substrate and the second substrate).

The first substrate (and/or its bonding material) and the second substrate (and/or its bonding material) may be arranged with respect to each other at a distance of 10 µm or less, or 6 µm or less, or 3 µm or less, or 1 µm or less, or 0.5 µm or less (e.g., prior to bonding the first substrate and the second substrate).

Having a bonding material may improve the bonding strength. However, it is also possible to form reliable joints between the first/second substrate by means of laser beam welding without having a bonding material in between the first/second substrate.

Having a bonding material between the first substrate and the second substrate, e.g. at the at least one joint, may allow to provide an electrical connection (between the first substrate and the second substrate, or between one of the substrates and a spacer element), e.g. at the at least one joint.

The atom trap apparatus further comprises at least one spacer element. Bonding the first substrate and the second substrate comprises bonding the first substrate and the at least one spacer element and bonding the second substrate and the at least one spacer element. The at least one spacer element is configured to define a positional relationship between the first substrate and the second substrate.

Having a spacer element may increase the variability of the atom trap apparatus. The spacer element may implement specific functions, e.g. supporting specific components of the atom trap apparatus. Defining a positional relationship between the first substrate and the second substrate e.g. may allow defining an optimal distance therebetween.

The method may comprise arranging the at least one spacer element with respect to the first substrate and/or with respect to the second substrate, e.g. prior to bonding the first substrate and the second substrate.

The atom trap apparatus may comprise a plurality of spacer elements, which e.g. may be individually bonded with the first/second substrate.

In the following, features of one spacer element are described which may apply to one or more, or all, spacer elements of the at least one spacer element, unless specified otherwise and unless otherwise contradictory.

The atom trap apparatus comprises a first set of joints connecting the spacer element and the first substrate. Bonding the first substrate and the at least one spacer element comprises forming at least one joint of the first set of joints by means of laser beam welding.

The atom trap apparatus comprises a second set of joints connecting the spacer element and the second substrate. Bonding the second substrate and the at least one spacer element comprises forming at least one joint of the second set of joints by means of laser beam welding.

The spacer element may be transparent. Bonding the first substrate and the second substrate may comprise passing the laser beam used for laser beam welding through the spacer element and e.g. through the first substrate. Each surface of the spacer element and of the first/second substrate through which the laser beam passes may have a high surface quality.

During bonding, the first/second substrate and the spacer element e.g. may have a distance of 10 µm or less, or 6 µm or less, or 3 µm or less, or 1 µm or less, or 0.5 µm or less.

The spacer element may comprise a dielectric material, optionally at least one of the following materials: SiO₂, Al₂O₃, AlN, BeO, diamond, SiN, fused silica, Quartz, sapphire, ITO, ZrO. The spacer element may comprise the same material as compared to the first substrate. This may facilitate the bonding between the spacer element and the first substrate.

The spacer element may be dielectric. The spacer element may comprise/may be made of a dielectric material. The spacer element may be made of/may comprise an insulating, e.g. non-semiconducting, material.

Surfaces of the spacer element that have a direct line of sight to an atom trapped in the atom trap/a position of an atom when trapped in the atom trap may be coated with a conductive layer, e.g. with a metal layer, to avoid built-up of parasitic charges and to avoid uncontrolled e-fields from built-up charges on these surfaces.

The at least one spacer element may support a photon detector, or a plurality of photon detectors. The photon detector may be arranged to have a direct line of sight to a position of an atom when trapped in the atom trap. The photon detector may be configured to receive an optical signal of the atom when trapped in the atom trap.

The photon detector may be a single photon detector, e.g. a single photon avalanche detector (SPAD), or a superconducting nanowire single-photon detector (SNSPD). Features disclosed with respect to photon detectors supported by the first substrate or the second substrate also apply to photon detectors supported by the at least one spacer element, and vice versa (e.g., the at least one photon detector supported by the at least one spacer element may comprise/may have a transparent conductive coating/film).

Having a direct line of sight between the photon detector and a trapped atom /a position of an atom when trapped in the atom trap e.g. may refer to that there is no waveguide in-between the photon detector and the trapped atom/a position of the atom when trapped in the atom trap.

The at least one photon detector may be supported by the first substrate and/or by the second substrate and/or by the spacer element, e.g. respectively.

The photon detector supported by the at least one spacer element may be an additional photon detector, e.g. in addition a photon detector supported by the first substrate and/or by the second substrate.

E.g., one or more, or all, of the at least on spacer element may support a respective photon detector.

The first substrate and the second substrate are arranged above each other. The at least one spacer element is arranged between the first substrate and the second substrate. Forming the at least one joint comprises forming a first set of joints, comprising one or more joints, each connecting the first substrate and the at least one spacer element, and forming a second set of joints, comprising one or more joints, each connecting the second substrate and the at least one spacer element. In a top view, the joints of the first set of joints and the joints of the second set of joints are formed in an alternating pattern.

In a top view, the joints of the first set of joints and the joints of the second set of joints may be formed such that they do not overlap each other.

The first substrate may shield the second substrate and vice versa. Both substrates may shield a space in-between the two substrates, e.g. from electric stray fields/field noise.

The at least one spacer element may be arranged (at least in parts or fully) between portions of the main surfaces of the first substrate and of the second substrate. The at least one spacer element may be bonded with the respective main surfaces of the first substrate and of the second substrate. The at least one spacer element may also be bonded with other respective surfaces of the first substrate and the second substrate, e.g. lateral surfaces and/or surfaces opposite from the respective main surface.

Joints of the first set of joints may comprise materials of the first substrate and of the spacer element. Joints of the second set of joints may comprise materials of the second substrate and of the spacer element.

Bonding the first substrate and the at least one spacer element may comprise passing the laser beam used for laser beam welding through the first substrate. Bonding the second substrate and a respective spacer element of the at least one spacer element may comprise passing the laser beam used for laser beam welding through the first substrate and through the respective spacer element of the at least one spacer element. Having an alternating pattern of the first set of joints and the second set of joints, in a top view, may prevent light blocking, e.g. by the first set of joints when forming the second set of joints. It may also allow to pass the laser beam through the first substrate for forming joints of the first set and of the second set (e.g., the second substrate may be non-transparent and the first substrate may be transparent).

It may also be possible to first form the second set of joints, e.g. by passing the laser beam through the first substrate and the at least one spacer element, and to subsequently form the first set of joints, e.g. by passing the laser beam through the first substrate. This sequence may also allow to prevent light blocking, e.g. by the first set of joints when forming the second set of joints.

The alternative pattern is particularly advantageous as it may allow optical access to the second set of joints through the first substrate also when the first set of joints has been formed.

The at least one joint may electrically connect the first substrate and/or the second substrate.

This configuration may allow for a compact integration and electrical connection of the first substrate and/or the second substrate. E.g., electrical signals (e.g., DC, RF, MW, ground) may be routed between both substrates. This configuration may eliminate the need for or reduce the number of additional components for electrically connecting the first/second substrate.

The at least one joint may electrically and directly connect the first substrate and the second substrate, e.g. when no spacer element is present.

The at least one joint may electrically and indirectly connect the first substrate and the second substrate, e.g. via a spacer element of the at least one spacer element, e.g. when at least one spacer element is present.

The at least one joint may electrically and directly connect the first/second substrate and the spacer element.

A spacer element of the at least one spacer element may comprise one or more electrical lines that e.g. connect (opposing) surfaces of the spacer element. The one or more electrical lines may be configured to route electrical signals (e.g., DC, RF, MW, ground) between the first substrate and the second substrate.

The electrical lines of the spacer element may be connected with the first/second substrate by means of the at least one joint, e.g., the connection between an electrical line of the spacer element and the first/second substrate may be a welded connection. The connection between an electrical line of the spacer element and the first/second substrate may be a mechanical connection (e.g., based on pressure imparted by the at least one joint at another part of the first/second substrate and the spacer element).

The first substrate and the second substrate may be arranged with respect to each other such that their respective main surfaces face each other. The atom trap may be located between the main surface of the first substrate and the main surface of the second substrate.

This configuration may be understood as a 3D trap described above. This configuration may allow to achieve particularly high trap depths, which may allow to reduce/minimize loss of atoms due to collisions with background gas molecules.

The first substrate and/or the second substrate may comprise a joining area. The joining area may comprise a joining material. The joining material may be transparent. The at least one joint may be formed at the joining area of the first substrate and/or the second substrate.

The joining material may be a dielectric material, optionally at least one of the following materials: SiO₂, Al₂O₃, AIN, BeO, diamond, SiN, fused silica, Quartz, sapphire, ITO, ZrO.

The at least one joint may comprise the joining area of the first/second substrate.

Having a joining area may improve the strength of the joints/the bonding strength. It may allow to bond substrates whose basic material is not (highly) susceptible to laser beam welding. E.g., a non-transparent basic material may be used for a first/second substrate, which still may be bonded by means of laser beam welding. Thereby, a larger range of materials may be used for the first/second substrates, e.g. tailored to specific functions/desired properties of the respective substrate.

The joining material may be different from a basic material/main material of the first/second substrate. E.g., the first/second substrate may comprise a basic material that e.g. is a dielectric material or a semiconductor material.

The joining material may be susceptible to laser beam welding. The joining material may facilitate bonding based on laser beam welding. E.g., the first/second substrate may comprise a semiconductor material (as a basic material) that e.g. is non-transparent at a wavelength of the laser used for forming the at least one joint. E.g., the joining material of the first/second substrate may be a dielectric and/or transparent material, such as e.g. SiO₂, Al₂O₃, AIN, BeO, diamond, SiN, fused silica, Quartz, sapphire, ITO, ZrO.

The first/second substrate may encompass the respective joining area. The joining area may be surrounded by a basic material of the first/second substrate, e.g. in a top view. The joining area also may be exposed at a side surface of the first/second substrate.

The method may further comprise replacing the first substrate with a replacement substrate or replacing the second substrate with the replacement substrate. Replacing the first substrate with the replacement substrate may comprise unbonding the first substrate and the second substrate, removing the first substrate from the atom trap apparatus, providing the replacement substrate comprising a main surface, arranging the replacement substrate and the second substrate with respect to each other, and bonding the replacement substrate and the second substrate, comprising: forming at least one joint by means of laser beam welding. Replacing the second substrate with the replacement substrate may comprise unbonding the first substrate and the second substrate, removing the second substrate from the atom trap apparatus, providing the replacement substrate comprising the main surface, arranging the replacement substrate and the first substrate with respect to each other, and bonding the replacement substrate and the first substrate, comprising: forming at least one joint by means of laser beam welding. The atom trap apparatus comprises at least one atom trap located above the main surface of the first substrate and/or located above the main surface of the second substrate and/or located above a main surface of the replacement substrate.

The present disclosure allows replacing a substrate, e.g. in case of a malfunction or in case of an update. This is highly advantageous and underscores the modularity of the present disclosure. The present disclosure allows to reuse functioning components and to easily reconfigure atom trap apparatuses by replacing specific substrates.

In a similar fashion, it is also possible to flexibly add additional components to the atom trap apparatus.

Replacing a specific substrate of the atom trap apparatus requires to manufacture again only the specific substrate that needs to be replaced and then replacing the substrate with the replacement substrate, which e.g. may be taken from singulated pieces from already produced wafers.

In contrast, according to conventional methods, e.g. anodic wafer bonding, updating single parts of an atom trap apparatus usually requires manufacturing new wafers (bottom, spacer, top)/essentially the entire atom trap apparatus even if only just one component needs to be updated/replacement. Therefore, embodiments of the present disclosure offer the possibility to upgrading single components to the atom trap apparatus at need, without necessarily needing to fabricate a new complete atom trap apparatus.

The at least one joint formed after bonding the first/second substrate and the replacement substrate connects the first/second substrate and the replacement substrate.

Prior to unbonding the first substrate and the second substrate, the atom trap apparatus may comprise at least one atom trap located above the main surface of the first substrate and/or located above the main surface of the second substrate.

After bonding the first/second substrate and the replacement substrate, the atom trap apparatus may comprise at least one atom trap located above the main surface of the first/second substrate and/or located above the main surface of the replacement substrate.

Unbonding the first/second substrate may comprise: removing the at least one joint/joints of the at least one joint such that the first substrate and the second substrate are not connected any more, e.g. by the respective joints. The joints may be removed by means of laser irradiation, e.g. due to heat caused by absorption of the laser beam.

After the replacement substrate and the second/first substrate are bonded, the replacement substrate may also be referred to as first/second substrate.

The first substrate and/or the second substrate may already comprise/may already have/may already be connected to/may already contact one or more joints that are formed by means of laser beam welding, prior to being bonded together.

Providing the first/second substrate comprising a main surface may comprise: Providing the first/second substrate comprising a main surface and at least one joint formed by means of laser beam welding.

The method may comprise bonding the first/second substrate and a third substrate, comprising forming at least one joint that connects the first/second substrate and the third substrate, by means of laser beam welding (e.g. prior to or after bonding the first substrate and the second substrate). The method may comprise bonding a plurality of substrates, comprising forming a plurality of joints, wherein at least one joint connects two respective substrates of the plurality of substrates, by means of laser beam. The plurality of substrates may comprise e.g. two, three, four, five, six or more substrates.

E.g., the first substrate and/or the second substrate respectively may be part of a 3D atom trap prior to being bonded with each other. E.g., the first substrate may have a third substrate facing the first substrate, while the first substrate and the third substrate support electrodes of an atom trap located between the first substrate and the third substrate; and the second substrate may have a fourth substrate facing the second substrate, while the second substrate and the fourth substrate support electrodes of an atom trap located between the second substrate and the fourth substrate; and the first and third substrate may be bonded together by at least one joint formed by means of laser beam welding, and the second and fourth substrate may be bonded together by at least one joint formed by means of laser beam welding. Bonding the first substrate and the second substrate may comprise bonding a first 3D atom trap to a second 3D atom trap.

The third/fourth substrate may also respectively comprise a Faraday cage.

The method may comprise bonding a third substrate and the first/second substrate, comprising forming at least one joint by means of laser beam welding. The method may comprise bonding a fourth substrate and the first/second/third substrate, comprising forming at least one joint by means of laser beam welding.

The disclosed methods and apparatuses are highly variable, scalable and modular.

According to a second aspect of the present disclosure, an atom trap apparatus is provided. The atom trap apparatus comprises a first substrate comprising a main surface and a second substrate comprising a main surface. The atom trap apparatus further comprises at least one joint connecting the first substrate and the second substrate. The at least one joint is formed by means of laser beam welding. The atom trap apparatus comprises at least one atom trap located above the main surface of the first substrate and/or located above the main surface of the second substrate.

The at least one joint bonds the first substrate with the second substrate.

The at least one joint may be formed by means of laser beam welding using a pulsed laser.

The atom trap apparatus may further comprise a cryostat. The atom trap/the atom trap apparatus/electrodes thereof may be configured to operate at cryogenic temperatures. The atom trap/the atom trap apparatus/electrodes thereof may be configured to operate at temperatures above 273 K.

E.g., the atom trap may be configured to operate at below 80 K, or below 10 K, or at roughly 4.2 K. Operating at cryogenic temperatures improves the vacuum and hence also the lifetime of trapped atoms, as one source of atom loss is due to collisions with molecules of background gas. Operating at cryogenic temperatures may also reduce electric field noise, e.g. due to oscillating patch potentials on surfaces of the atom trap apparatus that have a direct line of sight to a trapped atom.

Operating at room temperature, i.e. above 273 K, e.g. around 293 K, may allow for a simpler setup.

The atom trap apparatus further comprises at least one spacer element. The at least one spacer element defines a positional relationship between the first substrate and the second substrate. The first substrate is bonded with the at least one spacer element. The second substrate is bonded with the at least one spacer element.

The atom trap apparatus comprises at least one joint connecting the first substrate and the at least one spacer element. The atom trap apparatus comprises at least one joint.

The atom trap apparatus comprises a first set of joints connecting the spacer element and the first substrate. The atom trap apparatus comprises a second set of joints connecting the spacer element and the second substrate.

The atom trap apparatus may comprise a plurality of spacer elements, which e.g. may be individually bonded with the first/second substrate.

The first substrate may comprise/may be made of a dielectric material, optionally at least one of the following materials: SiO₂, Al₂O₃, AIN, BeO, diamond, SiN, fused silica, Quartz, sapphire, ITO, ZrO. The second substrate may comprise/may be made of a semiconductor material, optionally at least one of the following materials: Si, SiC, GaN, Graphene. Optionally, the at least one spacer element may comprise/may be made of a dielectric material, optionally at least one of the following materials: SiO₂, Al₂O₃, AIN, BeO, diamond, SiN, fused silica, Quartz, sapphire, ITO, ZrO.

This may allow to support components that are RF-critical by the first substrate, and to support non-RF-critical components by the second substrate. For the second substrate, and for its components, a standard semiconductor fabrication processes such as CMOS may be used.

An RF-critical component may be a component that provides, carries and/or receives an RF signal, e.g. an RF electrode or an RF waveguide. Also, a microwave waveguide and the microwave electrode may be RF-critical in this sense.

E.g., a DAC and a DC electrode may be considered as non-RF-critical.

E.g., the first substrate may comprise/may be made of fused silica/SiO₂ or sapphire/Al₂O₃. Fused silica/SiO₂ and sapphire/Al₂O₃ have a particularly low dielectric loss, which makes them especially suitable for RF components. They are further transparent at typical laser wavelengths used for laser beam welding, which may allow for an easy manufacturing. Further, sapphire has a high thermal conductivity, especially at cryogenic temperatures, which may be beneficial.

The at least one spacer element may comprise/may be made of the same material as compared to the first substrate. This may facilitate the bonding between the spacer element and the first substrate.

A loss tangent of the first substrate/of its material may be lower as compared to a loss tangent of the second substrate/of its material. A loss tangent of the first substrate may be below 1x10⁻³, e.g. at 293 K and at 10 MHz. A loss tangent of the second substrate may be above 1x10⁻³, e.g. at 293 K and at 10 MHz.

The first substrate may be transparent. The second substrate may be transparent. The second substrate may be non-transparent.

The at least one joint may comprise a bonding material. The at least one joint may comprise a first bonding material and a second bonding material.

The bonding material e.g. may comprise a metal, such as gold, copper, silver, and/or an alloy. The bonding material e.g. may comprise a conductive material. The bonding material may have a high absorption at a wavelength of the laser beam used for laser beam welding.

The first substrate and/or the second substrate may comprise a joining area. The joining area may comprise a joining material. The joining material may be transparent. The at least one joint may be formed at the joining area of the first substrate and/or the second substrate.

The at least one joint may contact the joining area of the first/second substrate.

The main surface of the first substrate and the main surface of the second substrate may face each other. The atom trap may be located between the main surface of the first substrate and the main surface of the second substrate.

The atom trap apparatus comprises a first set of joints, comprising one or more joints, each connecting the first substrate and the at least one spacer element, and a second set of joints, comprising one or more joints, each connecting the second substrate and the at least one spacer element. The first substrate and the second substrate are arranged above each other. The at least one spacer element is arranged between the first substrate and the second substrate. In a top view, the joints of the first set of joints and the joints of the second set of joints are formed in an alternating pattern.

The first substrate and/or the second substrate may comprise/may have/may be connected to one or more joints, respectively formed by means of laser beam welding, of a third/fourth substrate.

The atom trap apparatus may comprise a third substrate, e.g. arranged above/next to the first/second substrate, which is e.g. arranged above/next to the third substrate, the first substrate being bonded with the second substrate by at least one joint formed by means of laser beam welding, the third substrate being bonded with the first/second substrate by at least one joint formed by means of laser beam welding.

The atom trap apparatus may comprise a plurality of substrates and a plurality of joints, wherein respective two substrates of the plurality of substrates are connected to each other by at least one of the joints, the plurality of joints being formed by means of laser beam welding. The plurality of substrates may comprise e.g. two, three, four, five, six or more substrates.

The first substrate and/or the second substrate may comprise/may have/may be connected to/may contact one or more other joints that are formed by means of laser beam welding and that do not connect the first substrate and the second substrate. E.g., the first substrate and/or the second substrate respectively may be part of a 3D atom trap that does not comprise the respective other substrate.

E.g. the first/second substrate may be connected to a third substrate by one or more joints formed by means of laser beam welding.

In the present disclosure, the term "DC" refers to "direct current/voltage", unless otherwise specified or unless contradictory. In the present disclosure, the term "RF" refers to "radio frequency", unless otherwise specified or unless contradictory. In the present disclosure, the term "MW" refers to "microwave", unless otherwise specified or unless contradictory.

All technical implementation details, features and advantages described with respect to the first aspect of the present disclosure are self-evidently mutatis mutandis applicable for the second aspect of the present disclosure and vice versa.

### BRIEF DESCRIPTION OF THE DRAWINGS

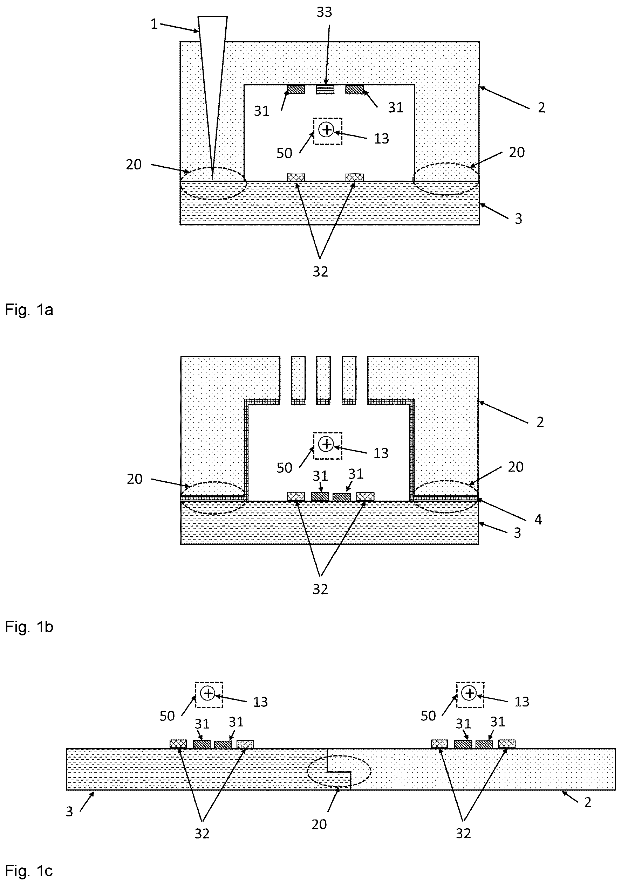

Reference will now be made to exemplary embodiments of the disclosure, examples of which are illustrated in the accompanying drawings. Wherever possible, the same reference numbers will be used throughout the drawings to refer to the same or like parts. Moreover, the features explained in context of a specific embodiment, for example that one of Fig. 1a, also apply to any one of the other embodiments, when appropriate, unless differently described.
- Figures 1a-1g: are cross-sectional views of atom trap apparatuses according to embodiments of the present disclosure.
- Figure 1h: is a top view of an atom trap apparatus according to embodiments of the present disclosure, as shown in Fig. 1g.
- Figure 2a: is a perspective view of an atom trap apparatus according to embodiments of the present disclosure.
- Figures 2b-2c: are cross-sectional views of atom trap apparatuses according to embodiments of the present disclosure, as shown in Fig. 2a.
- Figures 2d-2e: are top views of atom trap apparatuses according to embodiments of the present disclosure, as shown in Fig. 2a.
- Figures 3a-3b: are cross-sectional views of atom trap apparatuses according to embodiments of the present disclosure.
- Figure 4a: is a perspective view of a structured substrate that may be used in an atom trap apparatus and in methods according to embodiments of the present disclosure.
- Figures 4b-4c: are cross-sectional views of a section of a structured substrate that may be used in an atom trap apparatus and in methods according to embodiments of the present disclosure.
- Figures 4d-4e: are cross-sectional views of atom trap apparatuses according to embodiments of the present disclosure.
- Figure 4f: is a top view of a substrate that may be used in an atom trap apparatus and in methods according to embodiments of the present disclosure.
- Figures 5a-5b: are cross-sectional views of atom trap apparatuses according to embodiments of the present disclosure.
- Figure 6: is a cross-sectional view of an atom trap apparatus according to embodiments of the present disclosure.
- Figures 7a-7b: illustrate methods of producing an atom trap apparatus according to embodiments of the present disclosure.

### DESCRIPTION OF EMBODIMENTS

In the figures, the first substrate 2 may be transparent and the second substrate 3 may be non-transparent. The skilled person readily understands that other configurations are also possible, e.g. the second substrate 3 may be transparent and e.g. the first substrate 2 may be non-transparent. Also the first substrate 2 and the second substrate 3 may be both transparent.

Figures 1a-1g are cross-sectional views of atom trap apparatuses according to embodiments of the present disclosure.

The atom trap apparatus comprises a first substrate 2, a second substrate 3 and at least one joint 20 that connects the first substrate 2 and the second substrate 3. The at least one joint 20 (indicated by the dotted ellipsis and in some figures partially/fully omitted for ease of illustration) is formed by means of laser beam welding using laser beam 1. The atom trap apparatus comprises an atom trap 50 configured to trap a trapped atom 13.

In Fig. 1a, the respective main surfaces of the first substrate 2 and the second substrate 3 face each other. The atom trap 50 is formed above the main surfaces of the first substrate 2 and the second substrate 3. The atom trap 50 is located between the main surface of the first substrate 2 and the main surface of the second substrate 3. The first substrate 2 supports RF electrodes 31 and the MW electrode 33 of the atom trap 50. The second substrate 2 supports DC electrodes 32 of the atom trap 50.

In Fig. 1b, a conductive layer comprising a bonding material 4 is present between the first substrate 2 and the second substrate 3, and the first substrate 2 comprises/provides a Faraday cage, due to its conductive layer. The second substrate 3 supports RF electrodes 31 and DC electrodes 32 of the atom trap 50. The MW electrode 33 is omitted for ease of illustration but may be present. The conductive layer that provides the Faraday cage may be different from the bonding material 4 or may be identical to the bonding material 4 (this configuration is shown in Fig. 1b). The Faraday cage allows to shield the atom trap from stray electric field noise and to reduce decoherence.

The first substrate 2 comprises openings that have a direct line of sight to the atom trap 50/the trapped atom 13. These openings may be used for fluorescence detection, e.g. they may allow a fluorescence signal of the trapped atom 13 to pass through the first substrate 2 and to be detected outside of the first substrate 2. The fluorescence signal may be collected e.g. by a microarray lens. The fluorescence signal may be readout e.g. with an EMCCD camera and/or a (single) photon detector (such as a SPAD/SNSPD).

The atom trap apparatus of Fig. 1b may also comprise at least one spacer element (not illustrated in Fig. 1b) configured to define a positional relationship between the first substrate 2 and the second substrate 3, e.g. in-between the substrates 2 and 3.

It may also be possible to support a photodetector by the first substrate and/or by the second substrate and/or by an optional spacer element (not illustrated in Fig. 1b). E.g. then, the openings may be omitted or may be present.

In Fig. 1c, the atom trap apparatus comprises a plurality of atom traps 50 (illustrated as conventional surface traps/2D traps). A first atom trap 50 is located above the main surface of the first substrate 2, which supports RF electrodes 31 and DC electrodes 32 of the first atom trap 50. A second atom trap 50 is located above the main surface of the second substrate 3, which supports RF electrodes 31 and DC electrodes 32 of the second atom trap 50. The atom trap apparatus may be configured to shuttle atoms between the first atom trap and the second atom trap.

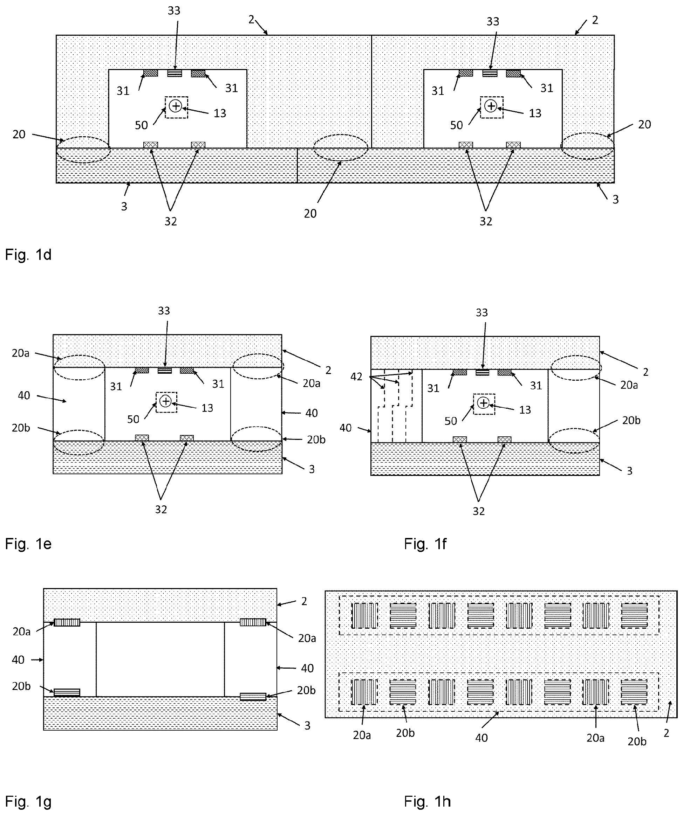

In Fig. 1d, two 3D atom traps are bonded together by means of laser beam welding (cf. central joint 20). Each of the two 3D atom traps comprises a respective first substrate 2 and a respective second substrate 3 that are bonded with each other by means of laser beam welding/that are connected by joints 20 (left and right joint 20) formed by means of laser beam welding. In addition, the two 3D atom traps are bonded with each other by means of laser beam welding/are connected by joint 20 (central joint 20) formed by means of laser beam welding. The atom trap apparatus may be configured to shuttle atoms between the first 3D atom trap and the second 3D atom trap.

In Fig. 1d, the central joint 20 connects the first substrate 2 of the left 3D trap with the second substrate 3 of the right 3D trap. Configurations are also possible where the first/second substrate of the first 3D trap is connected to the first/second substrate of the second 3D trap.

The atom trap apparatus of Fig. 1e comprises two spacer elements 40 arranged between the first substrate 2 and the second substrate 3, which are arranged above each other (the first substrate 2 is arranged above the second substrate 3). The spacer elements 40 define a positional relationship between the first substrate 2 and the second substrate 3. A first set of joints 20a connects the first substrate 2 and the spacer elements 40. A second set of joints 20b connects the second substrate 3 and the spacer elements 40. Spacer elements 40 may comprise a photodetector (not shown for easy of illustration).

In the atom trap apparatus of Fig. 1f, the spacer element 40 comprises electrical lines 42. The electrical lines 42 are configured to route electrical signals (e.g., DC, RF, MW, ground) between the first substrate 2 and the second substrate 3.

Fig. 1g is similar to Fig. 1e. Joints 20a of the first set of joints and joints 20b of the second set of joints 20b are indicated by means of hatched rectangles. The joints 20, 20a and 20b may be non-transparent.

Fig. 1h is a top view of an atom trap apparatus according to embodiments of the present disclosure, as shown in Fig. 1g. The spacer elements 40 are indicated by dashed lines. Joints 20a of the first set of joints and joints 20b of the second set of joints 20b are indicated by means of hatched rectangles having dashed circumferences. The second substrate 3 is not illustrated for ease of illustration.

The joints 20a of the first set of joints and the joints 20b of the second set of joints may respectively comprise a bonding material, e.g. a metal material. The joints 20a of the first set of joints and the joints 20b of the second set of joints are formed in an alternating pattern. This allows optical access to the second set of joints 20b through the first substrate 2 also when the first set of joints 20a has been formed.

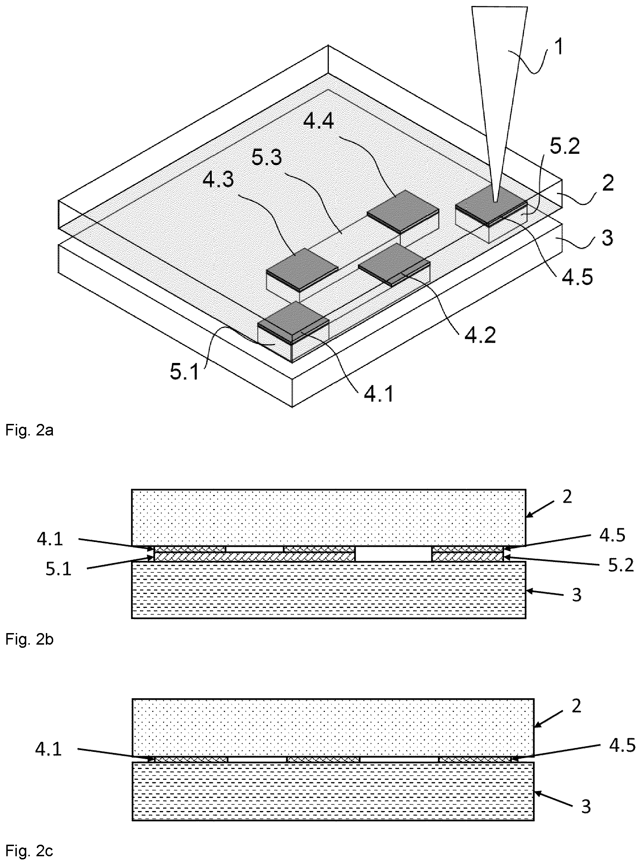

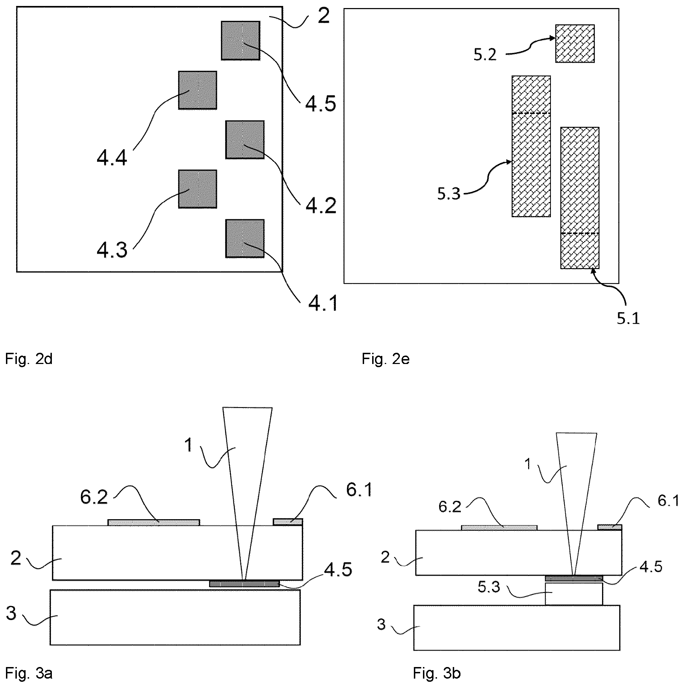

In Figs. 2a-5b, the at least one atom trap 50/a trapped atom 13 are not indicated for ease of illustration.

Figure 2a is a perspective view of an atom trap apparatus according to embodiments of the present disclosure.

The atom trap apparatus comprises a first substrate 2, a second substrate 3 and a plurality of joints that connect the first substrate 2 and the second substrate 3. (First) bonding materials 4.1-4.5 are provided on the first substrate 2. (Second) bonding materials 5.1-5.3 are provided on the second substrate 3. The joints are formed by means of laser beam welding using laser beam 1. Bonding the first substrate 2 and the second substrate 3 comprises heating the first bonding 4.1-4.5 material by means of the laser beam 1. The first bonding material 4.1-4.5 in turn heats the second bonding material 5.1-5.3. The first bonding material 4.1-4.5 and the second bonding material 5.1-5.3 diffuses and connects the first substrate 2 and the second substrate 3.

In a top view, the second bonding material 5.1 overlaps with the first bonding material 4.1 and 4.2, and the second bonding material 5.3 overlaps with the first bonding material 4.3 and 4.4. The joints comprise the first bonding material 4 and the second bonding material 5. In Figs. 2a-2e, the joints are located at the respective bonding materials 4 and 5, but are not indicated by dedicated reference signs for ease of illustration.

The first bonding materials 4.1-4.5 have a thickness of 1.0 µm or less. The second bonding materials 5.1-5.3 have a thickness of 1.0 µm or more and 100 µm or less. The first bonding materials 4.1-4.5 are directly heated due to absorption of the laser beam 1.

Figures 2b-2c are cross-sectional views of atom trap apparatuses according to embodiments of the present disclosure, as shown in Fig. 2a. In Fig. 2c, only the first bonding material 4.1, 4.5 is present between the first substrate 2 and the second substrate 3 (unlike in Figs. 2a-2b). Figures 2d-2e are top views of atom trap apparatuses according to embodiments of the present disclosure, as shown in Fig. 2a. Figs. 2d-2e illustrates a situation in which in a top view, the second bonding material 5.1, 5.3 overlaps with the first bonding material 4.1-4.2 and 4.3-4.4, respectively, while the second bonding material 5.2 fully overlaps with first bonding material 4.5.

Figures 3a-3b are cross-sectional views of atom trap apparatuses according to embodiments of the present disclosure. Conductive films 6.1 and 6.2 are present on a surface of the first substrate 2 that is opposite to a surface of the first substrate 2 where the first bonding material 4.5 is present. In Fig. 3b, also a second bonding material 5.3 is present. The laser beam 1 is irradiated/passes through the first substrate 2 and through an area of the surface of the first substrate 2 where no conductive film 6 is present.

Conductive films 6.1 and 6.2 may be electrodes of the at least one atom trap 50. Conductive films 6.1 and 6.2 may be configured to route electrical signals (e.g., DC, RF, MW, ground), e.g. may be electrical lines.

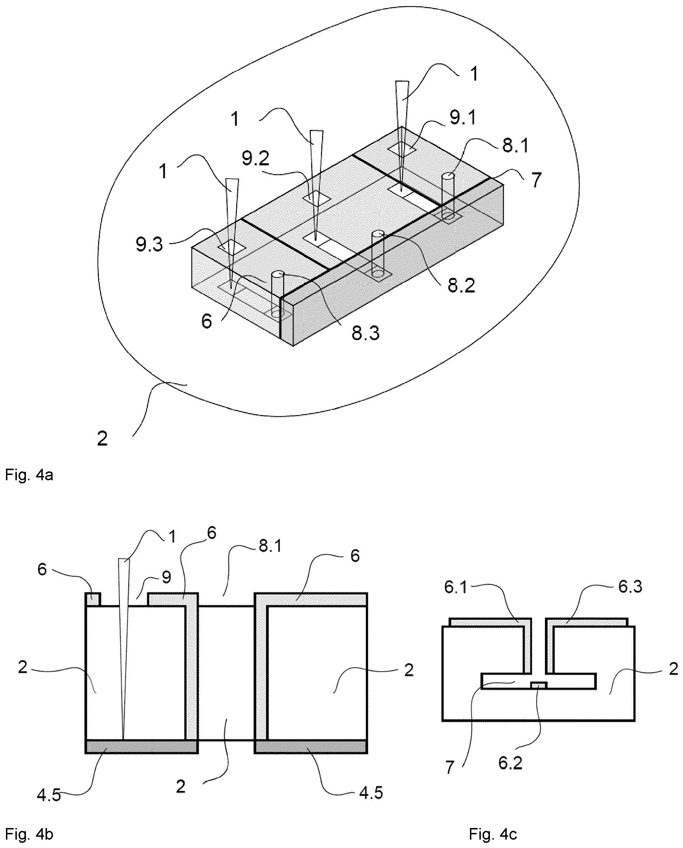

Figure 4a is a perspective view of a structured first substrate 2 that may be used in an atom trap apparatus and in methods according to embodiments of the present disclosure.

The first substrate 2 comprises conductive films 6 on surfaces of the first substrate 2. The first substrate 2 comprises recesses 7. The recesses 7 isolate conductive films 6 from each other. The recesses 7 may comprise conductive films. The recesses 7 may be configured to route electrical signals (e.g., DC, RF, MW, ground)/to provide an electrical connection, e.g. by means of conductive films comprised therein.

The first substrate 2 comprises holes 8.1-8.3. Holes 8.1-8.3 comprise a metal coating/conductive coating at the inner side surface. E.g., the conductive film 6 may be present at the inner side surface of holes 8.1-8.3. A metal coating at the inner side surface of holes 8.1-8.3 may be connected to conductive film 6. Holes 8.1-8.3 may be configured to route electrical signals (e.g., DC, RF, MW, ground) from one side of the first substrate 2 to the other side of the first substrate 2. Holes 8.1-8.3 may be referred to as metallized holes.

The first substrate 2 comprises openings 9.1-9.3 in the conductive films 6 through which the laser beam 1 used for laser beam welding may be irradiated/may pass.

Figure 4b is a cross-sectional view of a section of the structured first substrate 2 as shown in Fig. 4a, illustrating metallized hole 8.1 and opening 9.1 in the conductive film 6.

Figure 4c is a cross-sectional view of a section of the structured first substrate 2 as shown in Fig. 4a, showing recess 7. Conductive films 6.1 and 6.3, present on an outer surface of the first substrate 2, are isolated from each other by recess 7. Recess 7 comprises conductive film 6.2 which is configured to route electrical signals (e.g., DC, RF, MW, ground)/to provide an electrical connection.

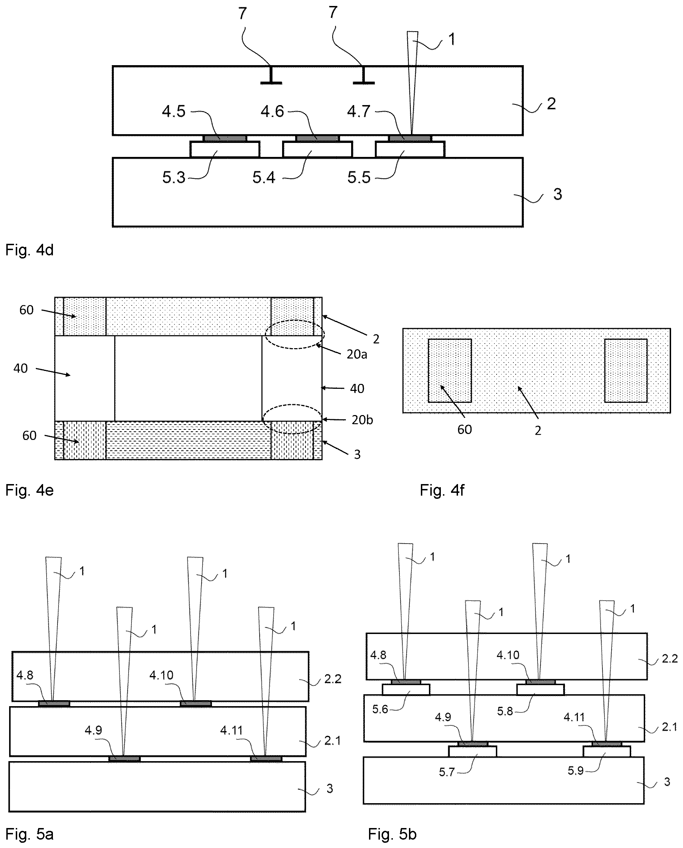

Figure 4d is a cross-sectional view of an atom trap apparatus according to embodiments of the present disclosure. The first substrate 2 is structured and comprises recess 7. Bonding the first substrate 2 to the second substrate 3 comprises laser beam welding by means of laser beam 1 that passes through the first substrate 2.

In Figs. 4a-4d, a structured first substrate 2 is illustrated. Also the second substrate 3 may be structured, and features disclosed with respect to the first substrate 2 may also apply to the second substrate 3.

Figure 4e is a cross-sectional view of an atom trap apparatus according to embodiments of the present disclosure. The first substrate 2 and the second substrate 3 respectively comprise a joining area 60. The joining areas 60 comprise a joining material that may be different from the basic material/main material of the respective substrate. The joining material is susceptible to laser beam welding. Joints 20a, 20b are formed at the respective joining areas 60. Joints 20a, 20b connect the spacer elements 40 with the respective substrate.

Joints formed at the respective joining areas 60 may also directly connect the respective substrates with each other, e.g. without a spacer element 40 in-between.

Figure 4f is a top view of a substrate that may be used in an atom trap apparatus and in methods according to embodiments of the present disclosure. In a top view, the joining area 60 is surrounded by a basic material/main material of the first substrate 2. The first substrate 2 encompasses the joining area 60.

Figures 5a-5b are cross-sectional views of atom trap apparatuses according to embodiments of the present disclosure.

In Fig. 5a, the first substrate 2.1 is bonded with the second substrate 3 by means of joints that connect the first substrate 2.1 and the second substrate 3. These joints comprise bonding material 4.9 and 4.11, respectively. These joints are formed by means of laser beam welding using laser beam 1. A third substrate 2.2 is bonded with the first substrate 2.1 by means of joints that connect the third substrate 2.2. and the first substrate 2.1. These joints comprise bonding material 4.8 and 4.10, respectively. These joints are formed by means of laser beam welding using laser beam 1.

Bonding the first substrate 2.1 and the second substrate 3 comprises passing/irradiating the laser beam 1 through the first substrate 2.1 and optionally also the third substrate 2.2. The first substrate 2.1 and the third substrate 2.2. are transparent. Bonding the third substrate 2.2 and the first substrate 2.1 comprises passing/irradiating the laser beam 1 through the third substrate 2.2.

Fig. 5b is similar to Fig. 5a. The joints also comprise second bonding materials 5.6, 5.8, 5.7 and 5.9, respectively.

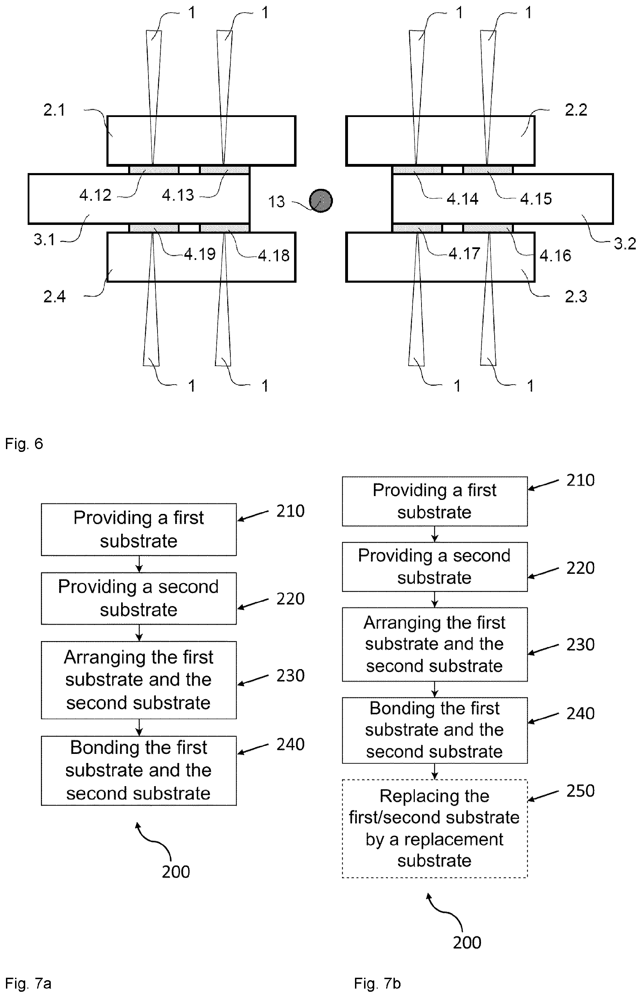

Figure 6 is a cross-sectional view of an atom trap apparatus according to embodiments of the present disclosure.

The atom trap apparatus of Fig. 6 comprises two assemblies, each comprising a first substrate 2.1/2.2, a second substrate 3.1/3.2, and a third substrate 2.4/2.3. An atom trap is located above the main surface of the first substrates 2.1/2.2 (in Fig. 6, the "above"-direction of the first substrates 2.1/2.2 is facing downwards). A trapped atom 13 is trapped in the atom trap.

The first substrate 2.1/2.2 is bonded with the second substrate 3.1/3.2 by means of joints that connect the first substrate 2.1/2.2 and the second substrate 3.1/3.2. These joints comprise bonding material 4.12 and 4.13, and 4.14 and 4.15, respectively. These joints are formed by means of laser beam welding using laser beam 1.

Bonding the first substrate 2.1/2.2 and the second substrate 3.1/3.2 comprises passing/irradiating the laser beam 1 through the first substrate 2.1/2.2. The first substrate 2.1/2.2 is transparent.

The third substrate 2.4/2.3 is bonded with the second substrate 3.1/3.2 by means of joints that connect the third substrate 2.4/2.3 and the second substrate 3.1/3.2. These joints comprise bonding material 4.19 and 4.18, and 4.17 and 4.16, respectively. These joints are formed by means of laser beam welding using laser beam 1.

Bonding the third substrate 2.4/2.3 and the second substrate 3.1/3.2 comprises passing/irradiating the laser beam 1 through the third substrate 2.4/2.3. The third substrate 2.4/2.3 is transparent.

Figures 7a-7b illustrate methods of producing an atom trap apparatus according to embodiments of the present disclosure. In action 210, a first substrate is provided that comprises a main surface. In action 220, a second substrate is provided the comprises a main surface. In action 230, the first substrate and the second substrate are arranged with respect to each other. In action 240, the first substrate and the second substrate are bonded. Bonding the first substrate and the second substrate comprises forming at least one joint by means of laser beam welding. The atom trap apparatus comprises at least one atom trap located above the main surface of the first substrate and/or located above the main surface of the second substrate. In Fig. 7b, the optional action 250 of replacing the first/second substrate by a replacement substrate is illustrated.

Although some aspects have been described in the context of a method, it is clear that these aspects also represent a description of the corresponding apparatus, where a method action or a feature of a method action corresponds to a block or a component. Analogously, aspects described in the context of an apparatus also represent a description of a corresponding component or item or feature of a corresponding method action.

### LIST OF REFERENCE SIGNS

- 1: Laser beam
- 2: first substrate
- 3: second substrate
- 4: thin bonding material
- 5: thick bonding material
- 6: conductive film
- 7: recess
- 8: metallized hole in first substrate 2
- 9: opening in conductive film
- 12: faraday cage
- 13: trapped atom
- 20: joint
- 31: RF electrode
- 32: DC electrode
- 33: MW electrode
- 40: spacer element
- 42: electrical line in spacer element 40
- 50: atom trap
- 60: joining area
- 200: method of producing an atom trap apparatus
- 210-250: actions of method 200

## Claims

1. A method (200) of producing an atom trap apparatus, the atom trap apparatus comprising a first substrate (2) and a second substrate (3), the method comprising:
providing (210) a first substrate (2) comprising a main surface,
providing (220) a second substrate (3) comprising a main surface,
arranging (230) the first substrate (2) and the second substrate (3) with respect to each other,
bonding (240) the first substrate (2) and the second substrate (3),
wherein bonding (240) the first substrate (2) and the second substrate (3) comprises forming at least one joint (20) by means of laser beam welding,
wherein the atom trap apparatus comprises at least one atom trap (50) located above the main surface of the first substrate (2) and/or located above the main surface of the second substrate (3),
wherein the atom trap apparatus further comprises at least one spacer element (40),
wherein bonding (240) the first substrate (2) and the second substrate (3) comprises:
bonding the first substrate (2) and the at least one spacer element (40), and
bonding the second substrate (3) and the at least one spacer element (40),
wherein the at least one spacer element (40) is configured to define a positional relationship between the first substrate (2) and the second substrate (3),
wherein the first substrate (2) and the second substrate (3) are arranged above each other,
wherein the at least one spacer element (40) is arranged between the first substrate (2) and the second substrate (3),
wherein forming the at least one joint (20) comprises:
forming a first set of joints (20a), comprising one or more joints (20a), each connecting the first substrate (2) and the at least one spacer element (40),
forming a second set of joints (20b), comprising one or more joints (20b), each connecting the second substrate (3) and the at least one spacer element (40),
wherein, in a top view, the joints (20a) of the first set of joints and the joints (20b) of the second set of joints are formed in an alternating pattern.

2. The method (200) according to claim 1, wherein the at least one joint (20) is formed by means of laser beam welding using a pulsed laser, the pulsed laser beam having a pulse width between 1 femtosecond and 1 microsecond, optionally 1 femtosecond and 100 nanoseconds, optionally 1 femtosecond and 10 nanoseconds, optionally 1 femtosecond and 1 nanosecond, optionally 1 femtosecond and 100 picoseconds, optionally 1 femtosecond and 10 picoseconds, optionally between 10 femtoseconds and 5 picoseconds, optionally between 50 femtoseconds and 1 picosecond.

3. The method (200) according to any one of the preceding claims,
wherein the at least one joint (20) comprises a joint comprising dissimilar materials, and/or
wherein the first substrate (2) and the second substrate (3) comprise dissimilar materials.

4. The method (200) according to any one of the preceding claims,
wherein the first substrate (2) and the second substrate (3) are arranged (230) such that a bonding material (4, 5) is present between the first substrate (2) and the second substrate (3),
wherein forming the at least one joint comprises heating the bonding material (4, 5).

5. The method (200) according to any one of the preceding claims, wherein the at least one joint (20) electrically connects the first substrate (2) and/or the second substrate (3).

6. The method (200) according to any one of the preceding claims,
wherein the first substrate (2) and the second substrate (3) are arranged (230) with respect to each other such that their respective main surfaces face each other,
wherein the atom trap (50) is located between the main surface of the first substrate (2) and the main surface of the second substrate (3).

7. The method (200) according to any one of the preceding claims,
wherein the first substrate (2) and/or the second substrate (3) comprises a joining area (60), the joining area (60) comprising a joining material, the joining material being transparent,
wherein the at least one joint (20) is formed at the joining area (60) of the first substrate (2) and/or the second substrate (3).

8. The method (200) according to any one of the preceding claims,
wherein the method further comprises:
replacing (250) the first substrate (2) with a replacement substrate or replacing the second substrate (3) with the replacement substrate,
wherein replacing (250) the first substrate (2) with the replacement substrate comprises:
• unbonding the first substrate (2) and the second substrate (3),
• removing the first substrate (2) from the atom trap apparatus,
• providing the replacement substrate comprising a main surface,
• arranging the replacement substrate and the second substrate (3) with respect to each other,
• bonding the replacement substrate and the second substrate (3), comprising: forming at least one joint by means of laser beam welding;
wherein replacing the second substrate (3) with the replacement substrate comprises:
• unbonding the first substrate (2) and the second substrate (3),
• removing the second substrate (3) from the atom trap apparatus,
• providing the replacement substrate comprising the main surface,
• arranging the replacement substrate and the first substrate (2) with respect to each other,
• bonding the replacement substrate and the first substrate (2), comprising: forming at least one joint by means of laser beam welding;
wherein the atom trap apparatus comprises at least one atom trap (50) located above the main surface of the first substrate (2) and/or located above the main surface of the second substrate (3) and/or located above a main surface of the replacement substrate.

9. An atom trap apparatus, comprising:
a first substrate (2) comprising a main surface; and
a second substrate (3) comprising a main surface;
wherein the atom trap apparatus further comprises:
at least one joint (20) connecting the first substrate (2) and the second substrate (3);
wherein the at least one joint (20) is formed by means of laser beam welding; and
wherein the atom trap apparatus comprises at least one atom trap (50) located above the main surface of the first substrate (2) and/or located above the main surface of the second substrate (3),
wherein the atom trap apparatus further comprises at least one spacer element (40),
wherein the at least one spacer element (40) defines a positional relationship between the first substrate (2) and the second substrate (3),
wherein the first substrate (2) is bonded with the at least one spacer element (40),
wherein the second substrate (3) is bonded with the at least one spacer element (40),
wherein the first substrate (2) and the second substrate (3) are arranged above each other,
wherein the at least one spacer element (40) is arranged between the first substrate (2) and the second substrate (3),
wherein the at least one joint (20) comprises a first set of joints (20a), comprising one or more joints (20a), each connecting the first substrate (2) and the at least one spacer element (40),
wherein the at least one joint (20) comprises a second set of joints (20b), comprising one or more joints (20b), each connecting the second substrate (3) and the at least one spacer element (40),
wherein, in a top view, the joints (20a) of the first set of joints and the joints (20b) of the second set of joints are formed in an alternating pattern.

10. The atom trap apparatus according to claim 9,
wherein the first substrate (2) comprises a dielectric material, optionally at least one of the following materials: SiO₂, Al₂O₃, AIN, BeO, diamond, SiN, fused silica, Quartz, sapphire, ITO, ZrO;
wherein the second substrate (3) comprises a semiconductor material, optionally at least one of the following materials: Si, SiC, GaN, Graphene;
wherein optionally, the at least one spacer element (40) comprises a dielectric material, optionally at least one of the following materials: SiO₂, Al₂O₃, AIN, BeO, diamond, SiN fused silica, Quartz, sapphire, ITO, ZrO.

11. The atom trap apparatus according to claim 9 or 10, wherein the at least one joint (20) comprises a bonding material (4, 5).

12. The atom trap apparatus according to any one of claims 9 to 11,
wherein the first substrate (2) and/or the second substrate (3) comprises a joining area (60), the joining area (60) comprising a joining material, the joining material being transparent,
wherein the at least one joint (20) is formed at the joining area (60) of the first substrate (2) and/or the second substrate (3).

## Patentansprüche

1. Verfahren (200) zum Herstellen eines Atomfallenapparats, wobei der Atomfallenapparat ein erstes Substrat (2) und ein zweites Substrat (3) umfasst, wobei das Verfahren umfasst:
Bereitstellen (210) eines ersten Substrats (2), das eine Hauptoberfläche umfasst,
Bereitstellen (220) eines zweiten Substrats (3), das eine Hauptoberfläche umfasst,
Anordnen (230) des ersten Substrats (2) und des zweiten Substrats (3) in Bezug aufeinander,
Bonden (240) des ersten Substrats (2) und des zweiten Substrats (3),
wobei Bonden (240) des ersten Substrats (2) und des zweiten Substrats (3) Bilden mindestens einer Fügestelle (20) mittels Laserstrahlschweißen umfasst,
wobei der Atomfallenapparat mindestens eine Atomfalle (50) umfasst, die über der Hauptoberfläche des ersten Substrats (2) lokalisiert ist und/oder über der Hauptoberfläche des zweiten Substrats (3) lokalisiert ist,
wobei der Atomfallenapparat ferner mindestens ein Spacerelement (40) umfasst,
wobei Bonden (240) des ersten Substrats (2) und des zweiten Substrats (3) umfasst:
Bonden des ersten Substrats (2) und des mindestens einen Spacerelements (40), und
Bonden des zweiten Substrats (3) und des mindestens einen Spacerelements (40),
wobei das mindestens eine Spacerelement (40) dazu konfiguriert ist, eine Positionsbeziehung zwischen dem ersten Substrat (2) und dem zweiten Substrat (3) zu definieren,
wobei das erste Substrat (2) und das zweite Substrat (3) übereinander angeordnet sind,
wobei das mindestens eine Spacerelement (40) zwischen dem ersten Substrat (2) und dem zweiten Substrat (3) angeordnet ist,
wobei Bilden der mindestens einen Fügestelle (20) umfasst:
Bilden eines ersten Satzes von Fügestellen (20a), der eine oder mehrere Fügestellen (20a) umfasst, die jeweils das erste Substrat (2) und das mindestens eine Spacerelement (40) verbinden,
Bilden eines zweiten Satzes von Fügestellen (20b), der eine oder mehrere Fügestellen (20b) umfasst, die jeweils das zweite Substrat (3) und das mindestens eine Spacerelement (40) verbinden,
wobei in einer Draufsicht die Fügestellen (20a) des ersten Satzes von Fügestellen und die Fügestellen (20b) des zweiten Satzes von Fügestellen in einem alternierenden Schema gebildet sind.

2. Verfahren (200) gemäß Anspruch 1, wobei die mindestens eine Fügestelle (20) mittels Laserstrahlschweißen unter Verwendung eines gepulsten Lasers gebildet wird, wobei der gepulste Laserstrahl eine Pulsweite zwischen 1 Femtosekunde und 1 Mikrosekunde hat, optional 1 Femtosekunde und 100 Nanosekunden, optional 1 Femtosekunde und 10 Nanosekunden, optional 1 Femtosekunde und 1 Nanosekunde, optional 1 Femtosekunde und 100 Pikosekunden, optional 1 Femtosekunde und 10 Pikosekunden, optional zwischen 10 Femtosekunden und 5 Pikosekunden, optional zwischen 50 Femtosekunden und 1 Pikosekunde.

3. Verfahren (200) gemäß einem der vorhergehenden Ansprüche,
wobei die mindestens eine Fügestelle (20) eine Fügestelle umfasst, die ungleiche Materialien umfasst, und/oder
wobei das erste Substrat (2) und das zweite Substrat (3) ungleiche Materialien umfassen.

4. Verfahren (200) gemäß einem der vorhergehenden Ansprüche,
wobei das erste Substrat (2) und das zweite Substrat (3) derart angeordnet (230) sind, dass ein Bondingmaterial (4, 5) zwischen dem ersten Substrat (2) und dem zweiten Substrat (3) vorhanden ist,
wobei Bilden der mindestens einen Fügestelle Erwärmen des Bondingmaterials (4, 5) umfasst.

5. Verfahren (200) gemäß einem der vorhergehenden Ansprüche, wobei die mindestens eine Fügestelle (20) das erste Substrat (2) und/oder das zweite Substrat (3) elektrisch verbindet.

6. Verfahren (200) gemäß einem der vorhergehenden Ansprüche,
wobei das erste Substrat (2) und das zweite Substrat (3) in Bezug aufeinander derart angeordnet (230) sind, dass ihre jeweiligen Hauptoberflächen einander zugewandt sind,
wobei die Atomfalle (50) zwischen der Hauptoberfläche des ersten Substrats (2) und der Hauptoberfläche des zweiten Substrats (3) lokalisiert ist.

7. Verfahren (200) gemäß einem der vorhergehenden Ansprüche,
wobei das erste Substrat (2) und/oder das zweite Substrat (3) einen Fügebereich (60) umfasst, wobei der Fügebereich (60) ein Fügematerial umfasst, wobei das Fügematerial transparent ist,
wobei die mindestens eine Fügestelle (20) an dem Fügebereich (60) des ersten Substrats (2) und/oder des zweiten Substrats (3) gebildet wird.

8. Verfahren (200) gemäß einem der vorhergehenden Ansprüche,
wobei das Verfahren ferner umfasst:
Ersetzen (250) des ersten Substrats (2) mit einem Ersatzsubstrat oder Ersetzen des zweiten Substrats (3) mit dem Ersatzsubstrat,
wobei Ersetzen (250) des ersten Substrats (2) mit dem Ersatzsubstrat umfasst:
• Entbonden des ersten Substrats (2) und des zweiten Substrats (3),
• Entfernen des ersten Substrats (2) von dem Atomfallenapparat,
• Bereitstellen des Ersatzsubstrats, das eine Hauptoberfläche umfasst,
• Anordnen des Ersatzsubstrats und des zweiten Substrats (3) in Bezug aufeinander,
• Bonden des Ersatzsubstrats und des zweiten Substrats (3), umfassend: Bilden mindestens einer Fügestelle mittels Laserstrahlschweißen;
wobei Ersetzen des zweiten Substrats (3) mit dem Ersatzsubstrat umfasst:
• Entbonden des ersten Substrats (2) und des zweiten Substrats (3),
• Entfernen des zweiten Substrats (3) von dem Atomfallenapparat,
• Bereitstellen des Ersatzsubstrats, das die Hauptoberfläche umfasst,
• Anordnen des Ersatzsubstrats und des ersten Substrats (2) in Bezug aufeinander,
• Bonden des Ersatzsubstrats und des ersten Substrats (2), umfassend: Bilden mindestens einer Fügestelle mittels Laserstrahlschweißen;
wobei der Atomfallenapparat mindestens eine Atomfalle (50) umfasst, die über der Hauptoberfläche des ersten Substrats (2) lokalisiert ist und/oder über der Hauptoberfläche des zweiten Substrats (3) lokalisiert ist und/oder über einer Hauptoberfläche des Ersatzsubstrats lokalisiert ist.

9. Atomfallenapparat, umfassend:
ein erstes Substrat (2), das eine Hauptoberfläche umfasst; und
ein zweites Substrat (3), das eine Hauptoberfläche umfasst;
wobei der Atomfallenapparat ferner umfasst: mindestens eine Fügestelle (20), die das erste Substrat (2) und das zweite Substrat (3) verbindet;
wobei die mindestens eine Fügestelle (20) mittels Laserstrahlschweißen gebildet ist; und
wobei der Atomfallenapparat mindestens eine Atomfalle (50) umfasst, die über der Hauptoberfläche des ersten Substrats (2) lokalisiert ist und/oder über der Hauptoberfläche des zweiten Substrats (3) lokalisiert ist,
wobei der Atomfallenapparat ferner mindestens ein Spacerelement (40) umfasst,
wobei das mindestens eine Spacerelement (40) eine Positionsbeziehung zwischen dem ersten Substrat (2) und dem zweiten Substrat (3) definiert,
wobei das erste Substrat (2) mit dem mindestens einen Spacerelement (40) gebondet ist,
wobei das zweite Substrat (3) mit dem mindestens einen Spacerelement (40) gebondet ist,
wobei das erste Substrat (2) und das zweite Substrat (3) übereinander angeordnet sind,
wobei das mindestens eine Spacerelement (40) zwischen dem ersten Substrat (2) und dem zweiten Substrat (3) angeordnet ist,
wobei die mindestens eine Fügestelle (20) einen ersten Satz von Fügestellen (20a) umfasst, der eine oder mehrere Fügestellen (20a) umfasst, die jeweils das erste Substrat (2) und das mindestens eine Spacerelement (40) verbinden,
wobei die mindestens eine Fügestelle (20) einen zweiten Satz von Fügestellen (20b) umfasst, der eine oder mehrere Fügestellen (20b) umfasst, die jeweils das zweite Substrat (3) und das mindestens eine Spacerelement (40) verbinden,
wobei in einer Draufsicht die Fügestellen (20a) des ersten Satzes von Fügestellen und die Fügestellen (20b) des zweiten Satzes von Fügestellen in einem alternierenden Schema gebildet sind.

10. Atomfallenapparat gemäß Anspruch 9,
wobei das erste Substrat (2) ein dielektrisches Material umfasst, optional mindestens eines der folgenden Materialien: SiO₂, Al₂O₃, AlN, BeO, Diamant, SiN, Quarzglas, Quarz, Saphir, ITO, ZrO;
wobei das zweite Substrat (3) ein Halbleitermaterial umfasst, optional mindestens eines der folgenden Materialien: Si, SiC, GaN, Graphen;
wobei optional das mindestens eine Spacerelement (40) ein dielektrisches Material umfasst, optional mindestens eines der folgenden Materialien: SiO₂, Al₂O₃, AlN, BeO, Diamant, SiN, Quarzglas, Quarz, Saphir, ITO, ZrO.

11. Atomfallenapparat gemäß Anspruch 9 oder 10, wobei die mindestens eine Fügestelle (20) ein Bondingmaterial (4, 5) umfasst.

12. Atomfallenapparat gemäß einem der Ansprüche 9 bis 11,
wobei das erste Substrat (2) und/oder das zweite Substrat (3) einen Fügebereich (60) umfasst, wobei der Fügebereich (60) ein Fügematerial umfasst, wobei das Fügematerial transparent ist,
wobei die mindestens eine Fügestelle (20) an dem Fügebereich (60) des ersten Substrats (2) und/oder des zweiten Substrats (3) gebildet ist.

## Revendications

1. Un procédé (200) de fabrication d'un appareil formant piège à atomes, l'appareil formant piège à atomes comprenant un premier substrat (2) et un deuxième substrat (3), le procédé comprenant :
le fait (210) de se mettre à disposition un premier substrat (2) présentant une surface principale,
le fait (220) de se mettre à disposition un deuxième substrat (3) présentant une surface principale,
le fait (230) de disposer le premier substrat (2) et le deuxième substrat (3) l'un par rapport à l'autre,
le fait (240) de lier le premier substrat (2) et le deuxième substrat (3),
la liaison (240) du premier substrat (2) et du deuxième substrat (3) comprenant le fait de former au moins une jonction (20) au moyen d'un soudage par faisceau laser,
l'appareil formant piège à atomes comprenant au moins un piège à atomes (50) situé au-dessus de la surface principale du premier substrat (2) et/ou situé au-dessus de la surface principale du deuxième substrat (3),
l'appareil formant piège à atomes comprenant en outre au moins un élément d'espacement (40),
la liaison (240) du premier substrat (2) et du deuxième substrat (3) comprenant :
le fait de lier le premier substrat (2) et ledit au moins un élément d'espacement (40), et
le fait de lier le deuxième substrat (3) et ledit au moins un élément d'espacement (40),
ledit au moins un élément d'espacement (40) étant configuré de manière à définir une relation de position entre le premier substrat (2) et le deuxième substrat (3),
le premier substrat (2) et le deuxième substrat (3) étant agencés l'un au-dessus de l'autre,
ledit au moins un élément d'espacement (40) étant agencé entre le premier substrat (2) et le deuxième substrat (3),
la formation de ladite au moins une jonction (20) comprenant :
le fait de former un premier ensemble de jonctions (20a), comprenant une ou plusieurs jonctions (20a), chacune reliant le premier substrat (2) et ledit au moins un élément d'espacement (40),
le fait de former un deuxième ensemble de jonctions (20b), comprenant une ou plusieurs jonctions (20b), chacune reliant le deuxième substrat (3) et ledit au moins un élément d'espacement (40) ;
en vue de dessus, les jonctions (20a) du premier ensemble de jonctions et les jonctions (20b) du deuxième ensemble de jonctions sont formées selon un motif alterné.

2. Le procédé (200) selon la revendication 1, dans lequel ladite au moins une jonction (20) est formée par soudage au faisceau laser au moyen d'un laser pulsé, le faisceau laser pulsé ayant une largeur d'impulsion comprise entre 1 femtoseconde et 1 microseconde, optionnellement entre 1 femtoseconde et 100 nanosecondes, optionnellement entre 1 femtoseconde et 10 nanosecondes, optionnellement entre 1 femtoseconde et 1 nanoseconde, optionnellement entre 1 femtoseconde et 100 picosecondes, optionnellement entre 1 femtoseconde et 10 picosecondes, optionnellement entre 10 femtosecondes et 5 picosecondes, optionnellement entre 50 femtosecondes et 1 picoseconde.

3. Le procédé (200) selon l'une quelconque des revendications précédentes,
dans lequel ladite au moins une jonction (20) comprend une jonction constituée de matériaux dissemblables, et/ou
dans lequel le premier substrat (2) et le deuxième substrat (3) sont constitués de matériaux dissemblables.

4. Le procédé (200) selon l'une quelconque des revendications précédentes,
dans lequel le premier substrat (2) et le deuxième substrat (3) sont agencés (230) de telle sorte qu'un matériau de liaison (4, 5) soit présent entre le premier substrat (2) et le deuxième substrat (3),
dans lequel la formation de ladite au moins une jonction comprend le fait de chauffer le matériau de liaison (4, 5).

5. Le procédé (200) selon l'une quelconque des revendications précédentes, dans lequel ladite au moins une jonction (20) relie électriquement le premier substrat (2) et/ou le deuxième substrat (3).

6. Le procédé (200) selon l'une quelconque des revendications précédentes,
dans lequel le premier substrat (2) et le deuxième substrat (3) sont agencés (230) l'un par rapport à l'autre de telle sorte que leurs surfaces principales respectives soient en face l'une de l'autre,
dans lequel le piège à atomes (50) est situé entre la surface principale du premier substrat (2) et la surface principale du deuxième substrat (3).

7. Le procédé (200) selon l'une quelconque des revendications précédentes,
dans lequel le premier substrat (2) et/ou le deuxième substrat (3) comprend une zone de jonction (60), la zone de jonction (60) comprenant un matériau de jonction, le matériau de jonction étant transparent,
dans lequel ladite au moins une jonction (20) est formée au niveau de la zone de jonction (60) du premier substrat (2) et/ou du deuxième substrat (3).

8. Le procédé (200) selon l'une quelconque des revendications précédentes,
dans lequel le procédé comprend en outre :
le fait (250) de remplacer le premier substrat (2) par un substrat de remplacement ou de remplacer le deuxième substrat (3) par le substrat de remplacement,
le remplacement (250) du premier substrat (2) par le substrat de remplacement comprenant :
• le fait de séparer le premier substrat (2) et le deuxième substrat (3),
• le fait de retirer le premier substrat (2) de l'appareil formant piège à atomes,
• le fait de se mettre à disposition le substrat de remplacement, comprenant une surface principale,
• le fait d'agencer le substrat de remplacement et le deuxième substrat (3) l'un par rapport à l'autre,
• le fait de lier le substrat de remplacement et le deuxième substrat (3), comprenant :
le fait de former au moins une jonction au moyen d'un soudage par faisceau laser ;
le remplacement du deuxième substrat (3) par le substrat de remplacement comprenant :
• le fait de séparer le premier substrat (2) et le deuxième substrat (3),
• le fait de retirer le deuxième substrat (3) de l'appareil formant piège à atomes,
• le fait de se mettre à disposition le substrat de remplacement, comprenant la surface principale,
• le fait d'agencer le substrat de remplacement et le premier substrat (2) l'un par rapport à l'autre,
• le fait de lier le substrat de remplacement et le premier substrat (2), comprenant :
le fait de former au moins une jonction au moyen d'un soudage par faisceau laser ;
l'appareil formant piège à atomes comprenant au moins un piège à atomes (50) situé au-dessus de la surface principale du premier substrat (2) et/ou situé au-dessus de la surface principale du deuxième substrat (3) et/ou situé au-dessus d'une surface principale du substrat de remplacement.

9. Un appareil formant piège à atomes, comprenant :
un premier substrat (2), présentant une surface principale ; et
un deuxième substrat (3), présentant une surface principale ;
l'appareil formant piège à atomes comprend en outre :
au moins une jonction (20) reliant le premier substrat (2) et le deuxième substrat (3) ;
ladite au moins une jonction (20) est formée par soudage par faisceau laser ; et
l'appareil formant piège à atomes comprend au moins un piège à atomes (50) situé au-dessus de la surface principale du premier substrat (2) et/ou situé au-dessus de la surface principale du deuxième substrat (3),
l'appareil formant piège à atomes comprenant en outre au moins un élément d'espacement (40),
ledit au moins un élément d'espacement (40) définissant une relation de position entre le premier substrat (2) et le deuxième substrat (3),
le premier substrat (2) étant lié audit au moins un élément d'espacement (40),
le deuxième substrat (3) étant lié audit au moins un élément d'espacement (40),
le premier substrat (2) et le deuxième substrat (3) étant agencés l'un au-dessus de l'autre,
ledit au moins un élément d'espacement (40) étant agencé entre le premier substrat (2) et le deuxième substrat (3),
ladite au moins une jonction (20) comprenant un premier ensemble de jonctions (20a), comprenant une ou plusieurs jonctions (20a), chacune reliant le premier substrat (2) et ledit au moins un élément d'espacement (40),
ladite au moins une jonction (20) comprenant un deuxième ensemble de jonctions (20b), comprenant une ou plusieurs jonctions (20b), chacune reliant le deuxième substrat (3) et ledit au moins un élément d'espacement (40) ;
en vue de dessus, les jonctions (20a) du premier ensemble de jonctions et les jonctions (20b) du deuxième ensemble de jonctions sont formées selon un motif alterné.

10. L'appareil formant piège à atomes selon la revendication 9,
dans lequel le premier substrat (2) comprend un matériau diélectrique, optionnellement au moins un des matériaux suivants : SiO₂, Al₂O₃, AlN, BeO, diamant, SiN, silice fondue, quartz, saphir, ITO, ZrO ;
dans lequel le deuxième substrat (3) comprend un matériau semiconducteur, optionnellement au moins un des matériaux suivants : Si, SiC, GaN, graphène ;
dans lequel, optionnellement, ledit au moins un élément d'espacement (40) comprend un matériau diélectrique, optionnellement au moins un des matériaux suivants : SiO₂, Al₂O₃, AlN, BeO, diamant, SiN, silice fondue, quartz, saphir, ITO, ZrO.

11. L'appareil formant piège à atomes selon la revendication 9 ou la revendication 10, dans lequel ladite au moins une jonction (20) comprend un matériau de liaison (4, 5).

12. L'appareil formant piège à atomes selon l'une quelconque des revendications 9 à 11,
dans lequel le premier substrat (2) et/ou le deuxième substrat (3) comprend une zone de jonction (60), la zone de jonction (60) comprenant un matériau de jonction, le matériau de jonction étant transparent,
ladite au moins une jonction (20) étant formée au niveau de la zone de jonction (60) du premier substrat (2) et/ou du deuxième substrat (3).
